(19) Europäisches Patentamt
European Patent Office
Office européen des brevets

(11) EP 1 965 639 B1

(12) EUROPÄISCHE PATENTSCHRIFT

(45) Veröffentlichungstag und Bekanntmachung des Hinweises auf die Patenterteilung:
**28.09.2016 Patentblatt 2016/39**

(21) Anmeldenummer: **06818823.4**

(22) Anmeldetag: **24.11.2006**

(51) Int Cl.:
***A01N 43/40*** *(2006.01)* ***A01N 37/46*** *(2006.01)*
***A01P 17/00*** *(2006.01)*

(86) Internationale Anmeldenummer:
**PCT/EP2006/011310**

(87) Internationale Veröffentlichungsnummer:
**WO 2007/079822 (19.07.2007 Gazette 2007/29)**

# (54) INSEKTENABWEHRMITTEL MISCHUNG

INSECT REPELLENT MIXTURE

MELANGE D'AGENTS INSECTIFUGES

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **22.12.2005 US 752371 P**

(43) Veröffentlichungstag der Anmeldung:
**10.09.2008 Patentblatt 2008/37**

(73) Patentinhaber: **Merck Patent GmbH**
**64293 Darmstadt (DE)**

(72) Erfinder:
- **GRUENEWALD, Hans-Werner**
**64354 Reinheim (DE)**
- **AXT-HEIDEMANN, Alexandra**
**23611 Bad Schwartau (DE)**

(56) Entgegenhaltungen:
**EP-A- 1 421 853** **WO-A-2004/100971**
**WO-A2-02/05646** **WO-A2-2005/074897**
**BE-A6- 1 006 578** **DE-A1- 19 618 089**
**FR-A1- 2 562 766** **GB-A- 2 054 377**
**US-A- 4 064 268** **US-A- 4 869 896**
**US-A- 5 929 113** **US-A- 6 159 452**

- **DATABASE WPI Week 200377 Derwent Publications Ltd., London, GB; AN 2003-816489 XP002419521 & JP 2002 337109 A (TAKEDA CHEM IND LTD) 27. November 2002 (2002-11-27)**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 1 965 639 B1

## Beschreibung

Die vorliegende Erfindung betrifft die Verwendung eines Insektenabwehrmittels, 2-(2-Hydroxyethyl)-1-methylpropylester der 1-Piperidincarboxylsäure, als Wirkungsverstärker für ein zweites Insektenabwehrmittel, entsprechende Zubereitungen und deren Herstellung.

Eine Vielzahl von Mücken, Bremsen, Flöhen, Läusen, Wanzen, sowie Zecken und Milben, im weiteren Verlauf unter den Sammelbegriffen Insekten und Spinnen - oder vereinfachend sogar unter dem im biologischen Sinn nicht korrekt gebrauchten Oberbegriff Insekten - zusammengefasst, ernähren sich vom Blut der Warmblüter, zu denen auch die Menschen zählen. Sie bohren sich mit ihren Stech- und Saugwerkzeugen in die Haut ihrer Opfer bis sie auf Blutgefäße stoßen. Während der Nahrungsaufnahme sondern sie gefäßerweiternde und gerinnungshemmende Mittel ab, die beim Wirt zu Juckreiz, Quaddelbildung und allergischen Reaktionen führen können. Insbesondere in den Tropen und Subtropen besteht darüber hinaus die Gefahr einer Infektion mit Krankheitserregern. So wird beispielsweise die Malaria durch die Anopheles-Mücke oder das Gelbfieber durch die Gelbfiebermücke übertragen. Auch in gemäßigten Regionen besteht die Gefahr von Infektionen mit von Insekten übertragenen Krankheitserregern wie beispielsweise der durch Zeckenbiss übertragenen Zeckenenzephalitis.

Einen Schutz vor der Belästigung durch Insekten und Spinnen bieten sogenannte Insektenabwehrmittel oder Repellentien. Darunter versteht man eine Reihe von Wirksubstanzen, die durch ihren Geruch abweisend auf Insekten und Spinnen wirken. Dabei handelt es sich in der Regel um schwerflüchtige Verbindungen, die langsam auf der Haut verdampfen und somit eine Duftglocke über der Haut bilden, welche die Insekten vertreibt. Zu den gebräuchlichsten Insektenabwehrmittel zählt N, N-Diethyl-3-methylbenzamid ("DEET"), das gegen Stechmücken, Stech- und Sandfliegen, Bremsen, Flöhe, Wanzen, Zecken und Milben aktiv ist. Ferner wird Dimethylphtalat (Handelsbezeichnung: Palatinol®M, DMP) gegen Stechmücken, Läuse, Zecken und Milben eingesetzt. Besonders wirksam ist 3-(N-n-Butyl-N-acetyl-amino)-propionsäureethylester (unter dem Handelsnamen IR3535® bei der Fa. Merck, Darmstadt, Deutschland erhältlich), das beispielsweise gegen Stechmücken, Tsetsefliegen und Bremsen eingesetzt werden kann.

Die meisten Insektenabwehrmittel - Wirkstoffe gehören den Stoffklassen der Amide, Alkohole, Ester und Ether an. Insektenabwehrmittel - Wirkstoffe sollen dabei üblicherweise die folgenden Bedingungen erfüllen: Sie dürfen nicht zu schnell verdunsten und nicht in die Haut eindringen. Sie dürfen auf die Haut weder primär irritierend noch sensibilisierend wirken und sollen außerdem nicht toxisch sein. Ihre Wirksamkeit muss auch unter Einwirkung von Hautflüssigkeit und/oder UV Strahlung erhalten bleiben.

Auch wenn diese Verbindungen, wie insbesondere 3-(N-n-Butyl-N-acetyl-amino)-propionsäureethylester, als gesundheitlich unbedenklich eingestuft sind, so ist es doch wünschenswert, wenn die Wirkung der Insektenabwehrmittel durch Additive verstärkt und so der Einsatz geringerer Insektenabwehrmittel-Mengen in der Formulierung ermöglicht wird.

WO 02/05646 beschreibt synergistische Insektenabwehrzusammensetzungen enthaltend Icaridin oder IR3535, jedoch nicht miteinander.

Jetzt wurde überraschend gefunden, dass ein Insektenabwehrmittel, 2-(2-Hydroxyethyl)-1-methylpropylester der 1-Piperidincarboxylsäure, als Wirkungsverstärker für mindestens ein zweites Insektenabwehrmittel dienen kann.

Ein erster Gegenstand der vorliegenden Erfindung ist daher die Verwendung eines Insektenabwehrmittels, 2-(2-Hydroxyethyl)-1-methylpropylester der 1-Piperidincarboxylsäure, als Wirkungsverstärker für mindestens ein zweites Insektenabwehrmittel.

Der 2-(2-Hydroxyethyl)-1-methylpropylester der 1-Piperidincarboxylsäure ist als Insektenabwehrmittel bekannt und ist im Handel beispielsweise unter der Bezeichnung Bayrepel® von der Fa. Lanxess erhältlich (INCI: Icaridin oder Picaridin; IUPAC: 1-piperidinecarboxylic acid 2-(2-hydroxyethyl)-1-methylpropylester; CAS Nr ist 119515-38-7).

Das Insektenabwehrmittel, das für eine Mischung mit einem Wirkungsverstärker, wie zuvor beschrieben geeignet ist, ist 3-(Acetyl-butyl-amino)-propionsäureethylester.

Die Verbindung ist aus der Literatur bekannt:

- 3-(Acetyl-butyl-amino)-propionsäureethylester (synonym zu 3-(N-n-Butyl-N-acetyl-amino)-propionsäureethylester) ist ein bekanntes Insektenabwehrmittel, das unter dem Handelsnamen IR3535® von der Firma Merck vertrieben wird.

- In WO 2005/074897 wird deren Herstellung beschrieben.

Die vorliegende Erfindung betrifft somit 3-(Acetyl-butyl-amino)-propionsäureethylester als zweites Insektenabwehrmittel für die erfindungsgemäße Verwendung, zusammen mit dem Wirkungsverstärker 2-(2-Hydroxyethyl)-1-methylpropylester der 1-Piperidincarboxylsäure. Für die Kombination dieser genannten Insektenabwehrmittel und einer entsprechenden Zubereitung, enthaltend diese beiden Insektenabwehrmittel, gilt weiterhin, dass vorzugsweise kein weiteres Insektenabwehrmittel, wie zuvor beschrieben enthalten ist.

Ein weiterer Gegenstand der vorliegenden Erfindung sind Zubereitungen enthaltend 1 bis 60 Gew.-% mindestens eines zweiten Insektenabwehrmittels und 0,1 bis 20 Gew.-% des Insektenabwehrmittels als Wirkungsverstärker,

wobei das Gewichtsprozentverhältnis des mindestens zweiten Insektenabwehrmittels zu dem Wirkungsverstärker im Bereich von 20:1 bis 1:1 liegt.

Bei den erfindungsgemäßen Zubereitungen handelt es sich dabei üblicherweise um topisch anwendbare Zubereitungen, beispielsweise kosmetische oder dermatologische Formulierungen. Die Zubereitungen enthalten in diesem Fall einen kosmetisch oder dermatologisch geeigneten Träger und je nach gewünschtem Eigenschaftsprofil optional weitere geeignete Inhaltsstoffe.

Die Zubereitungen können die genannten notwendigen oder optionalen Bestandteile bzw. Einschränkungen umfassen oder enthalten, daraus im wesentlichen oder daraus bestehen. Alle Verbindungen oder Komponenten, die in den Zubereitungen verwendet werden können, sind entweder bekannt und käuflich erwerbbar oder können nach bekannten Verfahren synthetisiert werden.

Bevorzugte Zubereitungen enthalten dabei 2 bis 50 Gew.-%, bevorzugt 5 bis 30 Gew.-%, besonders bevorzugt 10 bis 25 Gew.-% mindestens eines zweiten Insektenabwehrmittels, wie zuvor beschrieben. Bevorzugte Zubereitungen enthalten dabei 0,5 bis 10 Gew.-%, vorzugsweise maximal 5 Gew.-% und insbesondere bevorzugt maximal 3 Gew.-% des Insektenabwehrmittels als Wirkungsverstärker, wie zuvor beschrieben.

Das Gewichtsprozentverhältnis des mindestens zweiten Insektenabwehrmittels, wie zuvor beschrieben, zu dem Wirkungsverstärker, wie zuvor beschrieben, ist vorzugsweise im Bereich von 10:1 bis 5:1 und bei 1:1. Besonders bevorzugt liegt das Gewichtsprozentverhältnis bei 9:1, 5:1 und/oder 1:1.
Dabei bereitet es dem Fachmann keinerlei Schwierigkeiten die Mengen abhängig von der beabsichtigten Wirkung der Zubereitung entsprechend auszuwählen.

Im Sinne der vorliegenden Erfindung wird der Begriff Formulierung gleichbedeutend mit dem Begriff Zubereitung verwendet.

Die erfindungsgemäßen Zubereitungen werden beispielsweise in Form von Lösungen, Gelen, Stiften, Rollern, Pump-Sprays und Aerosol-Sprays angeboten, wobei Lösungen und Sprays den Hauptteil der im Handel erhältlichen Produkte bilden. Basis für diese beiden Produktformen sind meist alkoholische bzw. wässrig-alkoholische Lösungen unter Zusatz fettender Substanzen und leichter Parfümierung. Andere Zubereitungsformen, wie insbesondere Emulsionen, Cremes, Salben und dergleichen, sind zwar prinzipiell denkbar und erwünscht, allerdings bislang teilweise schwierig stabil zu formulieren. Auch hier können die erfindungsgemäßen Formulierungshilfsmittel vorteilhaft eingesetzt werden.

Dabei können die Zubereitungen weitere Aktivstoffe, vorzugsweise ausgewählt aus der Gruppe der organischen UV-Filter, Flavon-Derivate, Chromon-Derivate, Aryloxime oder Parabene enthalten.

Parabene sind 4-Hydroxybenzoesäureester, die in freier Form oder als Natrium-Salze zur Konservierung von Zubereitungen im Bereich der Nahrungsmittel, Kosmetik und Arzneimittel verwendet werden. Die Wirkung der Ester ist direkt proportional zur Kettenlänge des Alkyl-Restes, umgekehrt nimmt jedoch die Löslichkeit mit steigender Kettenlänge ab. Als nicht dissoziierende Verbindungen sind die Ester weitgehend pH-Wertunabhängig und wirken in einem pH-Bereich von 3,0-8,0. Der antimikrobielle Wirkmechanismus beruht auf einer Schädigung der Mikrobenmembranen durch die Oberflächenaktivität der PHB-Ester sowie auf der Eiweiß-Denaturierung. Daneben treten Interaktionen mit Coenzymen auf. Die Wirkung richtet sich gegen Pilze, Hefen und Bakterien. Die als Konservierungsmittel wichtigsten Parabene sind 4-Hydroxybenzoesäuremethylester, 4-Hydroxybenzoesäureethylester, 4-Hydroxybenzoesäurepropylester, 4-Hydroxybenzoesäurebutylester. Diese oft nur Methyl-, Ethyl-, Propyl-, Butylparaben genannten Verbindungen sind in gängigen Trägerstoffen für die zu konservierenden Zubereitungen nur schlecht löslich. Daher kann die Verwendung der Verbindungen nach Formel I die Einarbeitung von Parabenen, insbesondere 4-Hydroxybenzoesäuremethylester, 4-Hydroxybenzoesäureethylester, 4-Hydroxybenzoesäurepropylester, 4-Hydroxybenzoesäurebutylester in Zubereitungen erleichtern.

Unter den Aryloximen, die ebenfalls in üblichen Trägern für kosmetische und dermatologische Zubereitungen nur schwer löslich sind, wird vorzugsweise 2-Hydroxy-5-methyllaurophenonoxim, welches auch als HMLO, LPO oder F5 bezeichnet wird, eingesetzt. Seine Eignung zum Einsatz in kosmetischen Mitteln ist beispielsweise aus der Deutschen Offenlegungsschrift DE-A-4116123 bekannt. Zubereitungen, die 2-Hydroxy-5-methyllaurophenonoxim enthalten, sind demnach zur Behandlung von Hauterkrankungen, die mit Entzündungen einhergehen, geeignet. Es ist bekannt, dass derartige Zubereitungen z.B. zur Therapie der Psioriasis, unterschiedlicher Ekzemformen, irritativer und toxischer Dermatitis, UV-Dermatitis sowie weiterer allergischer und/oder entzündlicher Erkrankungen der Haut und der Hautanhangsgebilde verwendet werden können. Erfindungsgemäße Zubereitungen, die ein Aryloxim, vorzugsweise 2-Hydroxy-5-methyllaurophenonoxim enthalten, zeigen überraschende antiinflammatorische Eignung. Dabei enthalten die Zubereitungen vorzugsweise 0,01 bis 10 Gew.-% des Aryloxims, wobei es insbesondere bevorzugt ist, wenn die Zubereitung 0,05 bis 5 Gew.-% Aryloxim enthält.

Als Flavon-Derivate werden erfindungsgemäß Flavonoide und Coumaranone verstanden. Als Flavonoide werden erfindungsgemäß die Glykoside von Flavanonen, Flavonen, 3-Hydroxyflavonen (= Flavonolen), Auronen, Isoflavonen und Rotenoiden aufgefaßt [Römpp Chemie Lexikon, Band 9, 1993]. Im Rahmen der vorliegenden Erfindung werden hierunter jedoch auch die Aglykone, d.h. die zuckerfreien Bestandteile, und die Derivate der Flavonoide und der Aglykone verstanden. Weiterhin wird im Rahmen der vorliegenden Erfindung unter dem Begriff Flavonoid auch Anthocyanidin

(Cyanidin) verstanden. Im Rahmen der vorliegenden Erfindung werden unter Coumaranonen auch deren Derivate verstanden.

Bevorzugte Flavonoide leiten sich von Flavanonen, Flavonen, 3-Hydroxyflavonen, Auronen und Isoflavonen, insbesondere von Flavanonen, Flavonen, 3-Hydroxyflavonen und Auronen, ab.

Die Flavonoide sind vorzugsweise ausgewählt aus folgenden Verbindungen: 4,6,3',4'-Tetrahydroxyauron, Quercetin, Rutin, Isoquercetin, Eriodictyol, Taxifolin, Luteolin, Trishydroxyethylquercetin (Troxequercetin), Trishydroxyethylrutin (Troxerutin), Trishydroxyethylisoquercetin (Troxeisoquercetin), Trishydroxyethylluteolin (Troxeluteolin), α-Glycosylrutin, Tilirosid sowie deren Sulfaten und Phosphaten. Unter den Flavonoiden sind als erfindungsgemäße Aktivstoffe insbesondere Rutin, Tilirosid, α-Glycosylrutin und Troxerutin bevorzugt.

Unter den Coumaranonen ist 4,6,3',4'-Tetrahydroxybenzylcoumaranon-3 bevorzugt.

Unter Chromon-Derivaten werden vorzugsweise bestimmte Chromen-2-on-Derivate, die sich als Wirkstoffe zur vorbeugenden Behandlung von menschlicher Haut und menschlicher Haare gegen Alterungsprozesse und schädigende Umwelteinflüssen eignen, verstanden. Sie zeigen gleichzeitig ein niedriges Irritationspotential für die Haut, beeinflussen die Wasserbindung in der Haut positiv, erhalten oder erhöhen die Elastizität der Haut und fördern somit eine Glättung der Haut. Diese Verbindungen entsprechen vorzugsweise der Formel IV

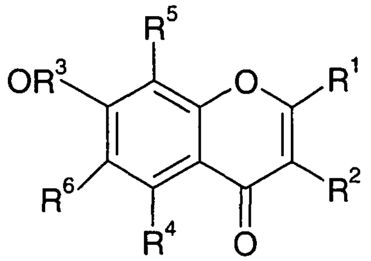

IV

wobei $R^1$ und $R^2$ gleich oder verschieden sein können und ausgewählt sind aus

- H, $-C(=O)-R^7$, $-C(=O)-OR^7$,
- geradkettigen oder verzweigten $C_1$- bis $C_{20}$-Alkylgruppen,
- geradkettigen oder verzweigten $C_3$- bis $C_{20}$-Alkenylgruppen, geradkettigen oder verzweigten $C_1$- bis $C_{20}$-Hydroxyalkylgruppen, wobei die Hydroxygruppe an ein primäres oder sekundäres Kohlenstoffatom der Kette gebunden sein kann und weiter die Alkylkette auch durch Sauerstoff unterbrochen sein kann, und/oder

  - $C_3$- bis $C_{10}$-Cycloalkylgruppen und/oder $C_3$- bis $C_{12}$-Cycloalkenylgruppen, wobei die Ringe jeweils auch durch $-(CH_2)_n$-Gruppen mit n = 1 bis 3 überbrückt sein können,
  $R^3$ steht für H oder geradkettige oder verzweigte $C_1$- bis $C_{20}$-Alkylgruppen, $R^4$ steht für H oder $OR^8$,
  $R^5$ und $R^6$ gleich oder verschieden sein können und ausgewählt sind aus
  - -H, -OH,
  - geradkettigen oder verzweigten $C_1$- bis $C_{20}$-Alkylgruppen,
  - geradkettigen oder verzweigten $C_3$- bis $C_{20}$-Alkenylgruppen,
  - geradkettigen oder verzweigten $C_1$- bis $C_{20}$-Hydroxyalkylgruppen, wobei die Hydroxygruppe an ein primäres oder sekundäres Kohlenstoffatom der Kette gebunden sein kann und weiter die Alkylkette auch durch Sauerstoff unterbrochen sein kann und

  $R^7$ steht für H, geradkettige oder verzweigte $C_1$- bis $C_{20}$-Alkylgruppen, eine Polyhydroxy-Verbindung, wie vorzugsweise einen Ascorbinsäurerest oder glycosidische Reste und
  $R^8$ steht für H oder geradkettige oder verzweigte $C_1$- bis $C_{20}$-Alkylgruppen, wobei mindestens 2 der Substituenten $R^1$, $R^2$, $R^4$-$R^6$ verschieden von H sind oder mindestens ein Substituent aus $R^1$ und $R^2$ für $-C(=O)-R^7$ oder $-C(=O)-OR^7$ steht.

Der Anteil an einer oder mehreren Verbindungen ausgewählt aus Flavonoiden, Chromon-Derivaten und Coumaranonen in der erfindungsgemäßen Zubereitung beträgt vorzugsweise von 0,001 bis 5 Gew.-%, besonders bevorzugt von 0,01 bis 2 Gew.-% bezogen auf die gesamte Zubereitung.

Erfindungsgemäß insbesondere bevorzugte Zubereitungen enthalten auch UV-Filter. Besonders bevorzugt sind solche UV-Filter, deren physiologische Unbedenklichkeit bereits nachgewiesen ist. Sowohl für UVA wie auch UVB-Filter gibt es viele aus der Fachliteratur bekannte und bewährte Substanzen, z.B.

Benzylidenkampferderivate wie 3-(4'-Methylbenzyliden)-dl-kampfer (z.B. Eusolex® 6300), 3-Benzylidenkampfer (z.B. Mexoryl® SD), Polymere von N-{(2 und 4)-[(2-oxoborn-3-yliden)methyl]benzyl}-acrylamid (z.B. Mexoryl® SW), N,N,N-Trimethyl-4-(2-oxoborn-3-ylidenmethyl)anilinium methylsulfat (z.B. Mexoryl® SK) oder (2-Oxoborn-3-yliden)toluol-4-sulfonsäure (z.B. Mexoryl® SL),

Benzoyl- oder Dibenzoylmethane wie 1-(4-tert-Butylphenyl)-3-(4-methoxyphenyl)propan-1,3-dion (z.B. Eusolex® 9020) oder 4-Isopropyldibenzoylmethan (z.B. Eusolex® 8020),

Benzophenone wie 2-Hydroxy-4-methoxybenzophenon (z.B. Eusolex® 4360) oder 2-Hydroxy-4-methoxybenzophenon-5-sulfonsäure und ihr Natriumsalz (z.B. Uvinul® MS-40),

Methoxyzimtsäureester wie Methoxyzimtsäureoctylester (z.B. Eusolex® 2292), 4-Methoxyzimtsäureisopentylester, z.B. als Gemisch der Isomere (z.B. Neo Heliopan® E 1000),

Salicylatderivate wie 2-Ethylhexylsalicylat (z.B. Eusolex® OS), 4-Isopropylbenzylsalicylat (z.B. Megasol®) oder 3,3,5-Trimethylcyclohexylsalicylat (z.B. Eusolex® HMS), 4-Aminobenzoesäure und Derivate wie 4-Aminobenzoesäure, 4-(Dimethylamino)benzoesäure-2-ethylhexylester (z.B. Eusolex® 6007), ethoxylierter 4-Aminobenzoesäureethylester (z.B. Uvinul® P25),
Phenylbenzimidazolsulfonsäuren, wie 2-Phenylbenzimidazol-5-sulfonsäure sowie ihre Kalium-, Natrium- und Triethanolaminsalze (z.B. Eusolex® 232), 2,2-(1,4-Phenylen)-bisbenzimidazol-4,6-disulfonsäure bzw. deren Salze (z.B. Neoheliopan® AP) oder 2,2-(1,4-Phenylen)-bisbenzimidazol-6-sulfonsäure;
und weitere Substanzen wie

- 2-Cyano-3,3-diphenylacrylsäure-2-ethylhexylester (z.B. Eusolex® OCR),
- 3,3'-(1,4-Phenylendimethylen)-bis-(7,7-dimethyl-2-oxobicyclo-[2.2.1]hept-1-ylmethansulfonsäure sowie ihre Salze (z.B. Mexoryl® SX) und - 2,4,6-Trianilino-(p-carbo-2'-ethylhexyl-1'-oxi)-1,3,5-triazin (z.B. Uvinul® T 150)
- 2-(4-Diethylamino-2-hydroxy-benzoyl)-benzoesäure hexylester (z.B. Uvinul®UVA Plus, Fa. BASF).

Die in der Liste aufgeführten Verbindungen sind nur als Beispiele aufzufassen. Selbstverständlich können auch andere UV-Filter verwendet werden.

Diese organischen UV-Filter werden in der Regel in einer Menge von 0,5 bis 10 Gewichtsprozent, vorzugsweise 1 - 8 %, in kosmetische Formulierungen eingearbeitet.

Weitere geeignete organische UV-Filter sind z.B.

- 2-(2H-Benzotriazol-2-yl)-4-methyl-6-(2-methyl-3-(1,3,3,3-tetramethyl-1-(trimethylsilyloxy)disiloxanyl)propyl)phenol (z.B. Silatrizole®),
- 4,4'-[(6-[4-((1,1-Dimethylethyl)aminocarbonyl)phenylamino]-1,3,5-triazin-2,4-diyl)diimino]bis(benzoesäure-2-ethylhexylester) (z.B. Uvasorb® HEB),
- $\alpha$-(Trimethylsilyl)-$\omega$-[trimethylsilyloxy]poly[oxy(dimethyl)silylen] [und ca. 6% methyl[2-[p-[2,2-bis(ethoxycarbonyl]vinyl]phenoxy]-1-methylenethyl] und ca. 1,5 % methyl[3-[p-[2,2-bis(ethoxycarbonyl)vinyl)phenoxy)-propenyl) und 0,1 bis 0,4% (methylhydrogen)silylen]] ($n \approx 60$) (CAS-Nr. 207 574-74-1)
- 2,2'-Methylen-bis-(6-(2H-benzotriazol-2-yl)-4-(1,1,3,3-tetramethylbutyl)phenol) (CAS-Nr. 103 597-45-1)
- 2,2'-(1,4-Phenylen)bis-(1 H-benzimidazol-4,6-disulfonsäure, Mononatriumsalz) (CAS-Nr. 180 898-37-7) und
- 2,4-bis-{[4-(2-Ethyl-hexyloxy)-2-hydroxyl]-phenyl}-6-(4-methoxyphenyl)-1,3,5-triazin (CAS-Nr. 103 597-45-, 187 393-00-6).
- 4,4'-[(6-[4-((1,1-Dimethylethyl)aminocarbonyl)phenylamino]-1,3,5-triazin-2,4-diyl)diiminolbis(benzoesäure-2-ethylhexylester) (z.B. Uvasorb® HEB),

Weitere geeignete UV-Filter sind auch Methoxyflavone ensprechend der älteren Deutschen Patentanmeldung DE 10232595.2.

Organische UV-Filter werden in der Regel in einer Menge von 0,5 bis 20 Gewichtsprozent, vorzugsweise 1 - 15 %, in kosmetische Formulierungen eingearbeitet.

Um einen optimierten UV-Schutz zu gewährleisten ist es weiter bevorzugt, wenn Zubereitungen mit Lichtschutzeigenschaften auch anorganische UV-Filter enthalten. Als anorganische UV-Filter sind solche aus der Gruppe der Titandioxide wie z.B. gecoatetes Titandioxid (z.B. Eusolex® T-2000, Eusolex®T-AQUA), Zinkoxide (z.B. Sachtotec®), Eisenoxide oder auch Ceroxide denkbar. Diese anorganischen UV-Filter werden in der Regel in einer Menge von 0,5 bis 20 Gewichtsprozent, vorzugsweise 2 - 10 %, in kosmetische Zubereitungen eingearbeitet.

Bevorzugte Verbindungen mit UV-filternden Eigenschaften sind 3-(4'-Methylbenzyliden)-dl-kampfer, 1-(4-tert-Butylphenyl)-3-(4-methoxy-phenyl)-pro-pan-1,3-dion, 4-Isopropyldibenzoylmethan, 2-Hydroxy-4-meth-oxy-ben-zo--phenon, Methoxyzimtsäureoctylester, 3,3,5-Trimethyl-cyclo-hexyl-sali-cylat, 4-(Dimethylamino)benzoesäure-2-ethylhexylester, 2-Cyano-3,3-di-phenyl-acrylsäure-2-ethylhexylester, 2-Phenyl-benzimidazol-5-sulfonsäure sowie ihre Kalium-, Natrium- und Triethanol-aminsalze.

Optimierte Zusammensetzungen können beispielsweise die Kombination der organischen UV-Filter 4'-Methoxy-6-hydroxyflavon mit 1-(4-tert-Butylphenyl)-3-(4-methoxyphenyl)propan-1,3-dion und 3-(4'-Methylbenzyliden)-dl-kampfer enthalten. Mit dieser Kombination ergibt sich ein Breitbandschutz, der durch Zusatz von anorganischen UV-Filtern, wie Titandioxid-Mikropartikeln noch ergänzt werden kann.

Alle genannten UV-Filter können auch in verkapselter Form eingesetzt werden. Insbesondere ist es von Vorteil organische UV-Filter in verkapselter Form einzusetzen. Im Einzelnen ergeben sich die folgenden Vorteile:

- Die Hydrophilie der Kapselwand kann unabhängig von der Löslichkeit des UV-Filters eingestellt werden. So können beispielsweise auch hydrophobe UV-Filter in rein wässrige Zubereitungen eingearbeitet werden. Zudem wird der häufig als unangenehm empfundene ölige Eindruck beim Auftragen der hydrophobe UV-Filter enthaltenden Zubereitung unterbunden.
- Bestimmte UV-Filter, insbesondere Dibenzoylmethanderivate, zeigen in kosmetischen Zubereitungen nur eine verminderte Photostabilität. Durch Verkapselung dieser Filter oder von Verbindungen, die die Photostabilität dieser Filter beeinträchtigen, wie beispielsweise Zimtsäurederivate, kann die Photostabilität der gesamten Zubereitung erhöht werden.
- In der Literatur wird immer wieder die Hautpenetration durch organische UV-Filter und das damit verbundene Reizpotential beim direkten Auftragen auf die menschliche Haut diskutiert. Durch die hier vorgeschlagene Verkapselung der entsprechenden Substanzen wird dieser Effekt unterbunden.
- Allgemein können durch Verkapselung einzelner UV-Filter oder anderer Inhaltstoffe Zubereitungsprobleme, die durch Wechselwirkung einzelner Zubereitungsbestandteile untereinander entstehen, wie Kristallisationsvorgänge, Ausfällungen und Agglomeratbildung vermieden werden, da die Wechselwirkung unterbunden wird.

Daher ist es erfindungsgemäß bevorzugt, wenn ein oder mehrere der oben genannten UV-Filter in verkapselter Form vorliegen. Vorteilhaft ist es dabei, wenn die Kapseln so klein sind, dass sie mit dem bloßen Auge nicht beobachtet werden können. Zur Erzielung der o.g. Effekte ist es weiterhin erforderlich, dass die Kapseln hinreichend stabil sind und den verkapselten Wirkstoff (UV-Filter) nicht oder nur in geringem Umfang an die Umgebung abgeben.

Geeignete Kapseln können Wände aus anorganischen oder organischen Polymeren aufweisen. Beispielsweise wird in US 6,242,099 B1 die Herstellung geeigneter Kapseln mit Wänden aus Chitin, Chitin-Derivaten oder polyhydroxylierten Polyaminen beschrieben. Erfindungsgemäß besonders bevorzugt einzusetzende Kapseln weisen Wände auf, die durch einen SolGel-Prozeß, wie er in den Anmeldungen WO 00/09652, WO 00/72806 und WO 00/71084 beschrieben ist, erhalten werden können. Bevorzugt sind hier wiederum Kapseln, deren Wände aus Kieselgel (Silica; undefiniertes Silicium-oxid-hydroxid) aufgebaut sind. Die Herstellung entsprechender Kapseln ist dem Fachmann beispielsweise aus den zitierten Patentanmeldungen bekannt, deren Inhalt ausdrücklich auch zum Gegenstand der vorliegenden Anmeldung gehört.

Dabei sind die Kapseln in erfindungsgemäßen Zubereitungen vorzugsweise in solchen Mengen enthalten, die gewährleisten, dass die verkapselten UV-Filter in den oben angegebenen Mengen in der Zubereitung vorliegen.

Erfindungsgemäß insbesondere bevorzugte Zubereitungen enthalten auch ein oder mehrere Antioxidantien.

Es gibt viele aus der Fachliteratur bekannte und bewährte Substanzen, die als Antioxidantien verwendet werden können, z.B. Aminosäuren (z.B. Glycin, Histidin, Tyrosin, Tryptophan) und deren Derivate, Imidazole, (z.B. Urocaninsäure) und deren Derivate, Peptide wie D,L-Carnosin, D-Carnosin, L-Carnosin und deren Derivate (z.B. Anserin), Carotinoide, Carotine (z.B. $\alpha$-Carotin, $\beta$-Carotin, Lycopin) und deren Derivate, Chlorogensäure und deren Derivate, Liponsäure und deren Derivate (z.B. Dihydroliponsäure), Aurothioglucose, Propylthiouracil und andere Thiole (z.B. Thioredoxin, Glutathion, Cystein, Cystin, Cystamin und deren Glycosyl-, N-Acetyl-, Methyl-, Ethyl-, Propyl-, Amyl-, Butyl- und Lauryl-, Palmitoyl-, Oleyl-, $\gamma$-Linoleyl, Cholesteryl- und Glycerylester) sowie deren Salze, Dilaurylthiodipropionat, Distearylthiodipropionat, Thiodipropionsäure und deren Derivate (Ester, Ether, Peptide, Lipide, Nukleotide, Nukleoside und Salze) sowie Sulfoximinverbindungen (z.B. Buthioninsulfoximine, Homocysteinsulfoximin, Buthioninsulfone, Penta-, Hexa-, Heptathioninsulfoximin) in sehr geringen verträglichen Dosierungen (z.B. pmol bis $\mu$mol/kg), ferner (Metall-) Chelatoren, (z.B. $\alpha$-Hydroxyfettsäuren, Palmitinsäure, Phytinsäure, Lactoferrin), $\alpha$-Hydroxysäuren (z.B. Citronensäure, Milchsäure, Äpfelsäure), Huminsäure, Gallensäure, Gallenextrakte, Bilirubin, Biliverdin, EDTA, EGTA und deren Derivate, ungesättigte Fettsäuren und deren Derivate, Vitamin C und Derivate (z.B. Ascorbylpalmitat, Magnesium-Ascorbylphosphat, Ascorbylacetat), Tocopherole und Derivate (z.B. Vitamin-E-acetat), Vitamin A und Derivate (z.B. Vitamin-A-palmitat) sowie Koniferylbenzoat des Benzoeharzes, Rutinsäure und deren Derivate, $\alpha$-Glycosylrutin, Ferulasäure, Furfurylidenglucitol, Carnosin, Butylhydroxytoluol, Butylhydroxyanisol, Nordohydroguajaretsäure, Trihydroxybutyrophenon, Quercitin, Harnsäure und deren Derivate, Mannose und deren Derivate, Zink und dessen Derivate (z.B. ZnO, $ZnSO_4$), Selen und dessen Derivate (z.B. Selenmethionin), Stilbene und deren Derivate (z.B. Stilbenoxid, trans-Stilbenoxid).

Geeignete Antioxidantien sind auch Verbindungen der allgemeinen Formel

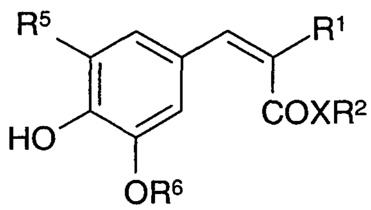

worin

$R^1$ aus der Gruppe $-C(O)CH_3$, $-CO_2R^3$, $-C(O)NH_2$ und $-C(O)N(R^4)_2$ ausgewählt werden kann,
X O oder NH,
$R^2$ lineares oder verzweigtes Alkyl mit 1 bis 30 C-Atomen,
$R^3$ lineares oder verzweigtes Alkyl mit 1 bis 20 C-Atomen,
$R^4$ jeweils unabhängig voneinander H oder lineares oder verzweigtes Alkyl mit 1 bis 8 C-Atomen,
$R^5$ lineares oder verzweigtes Alkyl mit 1 bis 8 C-Atomen oder lineares oder verzweigtes Alkoxy mit 1 bis 8 C-Atomen und
$R^6$ lineares oder verzweigtes Alkyl mit 1 bis 8 C-Atomen bedeutet, vorzugsweise Derivate der 2-(4-Hydroxy-3,5-dimethoxybenzyliden)-malonsäure, besonders bevorzugt 2-(4-Hydroxy-3,5-dimethoxybenzyliden)-malonsäure-bis-(2-ethylhexyl)ester (z.B. Oxynex® ST Liquid).

Mischungen von Antioxidantien sind ebenfalls zur Verwendung in den erfindungsgemäßen kosmetischen Zubereitungen geeignet. Bekannte und käufliche Mischungen sind beispielsweise Mischungen enthaltend als aktive Inhaltsstoffe Lecithin, L-(+)-Ascorbylpalmitat und Zitronensäure (z.B. (z.B. Oxynex® AP), natürliche Tocopherole, L-(+)-Ascorbylpalmitat, L-(+)-Ascorbinsäure und Zitronensäure (z.B. Oxynex® K LIQUID), Tocopherolextrakte aus natürlichen Quellen, L-(+)-Ascorbylpalmitat, L-(+)-Ascorbinsäure und Zitronensäure (z.B. Oxynex® L LIQUID), DL-$\alpha$-Tocopherol, L-(+)-Ascorbylpalmitat, Zitronensäure und Lecithin (z.B. Oxynex® LM) oder Butylhydroxytoluol (BHT), L-(+)-Ascorbylpalmitat und Zitronensäure (z.B. Oxynex® 2004).

Die erfindungsgemäßen Zubereitungen können als weitere Inhaltsstoffe Vitamine enthalten. Bevorzugt sind Vitamine und Vitamin-Derivate ausgewählt aus Vitamin A, Vitamin-A-Propionat, Vitamin-A-Palmitat, Vitamin-A-Acetat, Retinol, Vitamin B, Thiaminchloridhydrochlorid (Vitamin $B_1$), Riboflavin (Vitamin $B_2$), Nicotinsäureamid, Vitamin C (Ascorbinsäure), Vitamin D, Ergocalciferol (Vitamin $D_2$), Vitamin E, DL-$\alpha$-Tocopherol, Tocopherol-E-Acetat, Tocopherolhydrogensuccinat, Vitamin $K_1$, Esculin (Vitamin P-Wirkstoff), Thiamin (Vitamin $B_1$), Nicotinsäure (Niacin), Pyridoxin, Pyridoxal, Pyridoxamin, (Vitamin $B_6$), Panthothensäure, Biotin, Folsäure und Cobalamin (Vitamin $B_{12}$) in den erfindungsgemäßen kosmetischen Zubereitungen enthalten, insbesondere bevorzugt Vitamin-A-Palmitat, Vitamin C und dessen Derivaten, DL-$\alpha$-Tocopherol, Tocopherol-E-Acetat, Nicotinsäure, Pantothensäure und Biotin.

Unter den Phenolen mit antioxidativer Wirkung sind die teilweise als Naturstoffe vorkommenden Polyphenole für Anwendungen im pharmazeutischen, kosmetischen oder Ernährungsbereich besonders interessant. Beispielsweise weisen die hauptsächlich als Pflanzenfarbstoffe bekannten Flavonoide oder Bioflavonoide häufig ein antioxidantes Potential auf. Mit Effekten des Substitutionsmusters von Mono- und Dihydoxyflavonen beschäftigen sich K. Lemanska, H. Szymusiak, B. Tyrakowska, R. Zielinski, I.M.C.M. Rietjens; Current Topics in Biophysics 2000, 24(2), 101-108. Es wird dort beobachtet, dass Dihydroxyflavone mit einer OH-Gruppe benachbart zur Ketofunktion oder OH-Gruppen in 3'4'- oder 6,7- oder 7,8-Position antioxidative Eigenschaften aufweisen, während andere Mono- und Dihydroxyflavone teilweise keine antioxidativen Eigenschaften aufweisen.

Häufig wird Quercetin (Cyanidanol, Cyanidenolon 1522, Meletin, Sophoretin, Ericin, 3,3',4',5,7-Pentahydroxyflavon) als besonders wirksames Antioxidans genannt (z.B. C.A. Rice-Evans, N.J. Miller, G. Paganga, Trends in Plant Science 1997, 2(4), 152-159). K. Lemanska, H. Szymusiak, B. Tyrakowska, R. Zielinski, A.E.M.F. Soffers, I.M.C.M. Rietjens; Free Radical Biology&Medicine 2001, 31(7), 869-881 untersuchen die pH-Abhängigkeit der antioxidanten Wirkung von Hydoxyflavonen. Über den gesamten pH-Bereich zeigt Quercetin die höchste Aktivität der untersuchten Strukturen.

Geeignete Antioxidantien sind weiter Verbindungen der Formel V

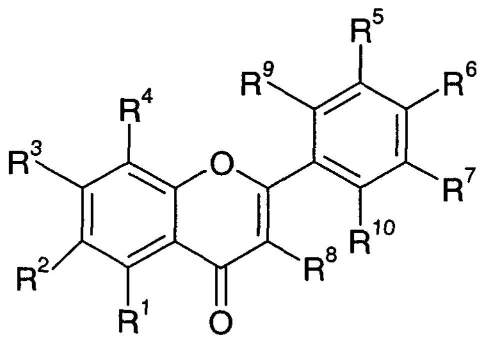

V

wobei $R^1$ bis $R^{10}$ gleich oder verschieden sein können und ausgewählt sind aus

- H
- $OR^{11}$
- geradkettigen oder verzweigten $C_1$- bis $C_{20}$-Alkylgruppen,
- geradkettigen oder verzweigten $C_3$- bis $C_{20}$-Alkenylgruppen,
- geradkettigen oder verzweigten $C_1$- bis $C_{20}$-Hydroxyalkylgruppen, wobei die Hydroxygruppe an ein primäres oder sekundäres Kohlenstoffatom der Kette gebunden sein kann und weiter die Alkylkette auch durch Sauerstoff unterbrochen sein kann, und/oder
- $C_3$- bis $C_{10}$-Cycloalkylgruppen und/oder $C_3$- bis $C_{12}$-Cycloalkenylgruppen, wobei die Ringe jeweils auch durch $-(CH_2)_n$-Gruppen mit n = 1 bis 3 überbrückt sein können,
- wobei alle $OR^{11}$ unabhängig voneinander stehen für

  - OH
  - geradkettige oder verzweigte $C_1$- bis $C_{20}$-Alkyloxygruppen,
  - geradkettigen oder verzweigten $C_3$- bis $C_{20}$-Alkenyloxygruppen,
  - geradkettigen oder verzweigten $C_1$- bis $C_{20}$-Hydroxyalkoxygruppen, wobei die Hydroxygruppe(n) an ein primäre oder sekundäre Kohlenstoffatome der Kette gebunden sein können und weiter die Alkylkette auch durch Sauerstoff unterbrochen sein kann, und/oder
  - $C_3$- bis $C_{10}$-Cycloalkyloxygruppen und/oder $C_3$- bis $C_{12}$-Cycloalkenyloxygruppen, wobei die Ringe jeweils auch durch $-(CH_2)_n$-Gruppen mit n = 1 bis 3 überbrückt sein können und/oder,
  - Mono- und/oder Oligoglycosylreste,

  mit der Maßgabe, dass mindestens 4 Reste aus $R^1$ bis $R^7$ stehen für OH und dass im Molekül mindestens 2 Paare benachbarter Gruppen -OH vorliegen,
- oder $R^2$, $R^5$ und $R^6$ für OH und die Reste $R^1$, $R^3$, $R^4$ und $R^{7-10}$ für H stehen,

wie sie in der älteren Deutschen Patentanmeldung DE 10244282.7 beschrieben sind.

Vorteile der erfindungsgemäßen Zusammensetzungen enthaltend mindestens ein Antioxidans sind dabei neben den oben genannten Vorteilen insbesondere die antioxidante Wirkung und die gute Hautverträglichkeit. Zusätzlich sind bevorzugte der hier beschriebenen Verbindungen farblos oder nur schwach gefärbt und führen so nicht oder nur in geringer Weise zu Verfärbungen der Zubereitungen. Von Vorteil ist insbesondere das besondere Wirkprofil der Verbindungen nach Formel V, welches sich im DPPH-Assay in einer hohen Kapazität Radikale zu fangen ($EC_{50}$), einer zeitverzögerten Wirkung ($T_{EC50}$ > 120 min) und damit einer mittleren bis hohen antiradikalischen Effizienz (AE) äußert. Zudem vereinigen die Verbindungen nach Formel V im Molekül antioxidative Eigenschaften mit UV-Absorption im UV-A- und/oder -B-Bereich. Bevorzugt sind daher auch Zubereitungen enthaltend zumindest eine Verbindung der Formel V, die dadurch gekennzeichnet ist, dass mindestens zwei benachbarte Reste der Reste $R^1$ bis $R^4$ stehen für OH und mindestens zwei benachbarte Reste der Reste $R^5$ bis $R^7$ stehen für OH. Insbesondere bevorzugte Zubereitungen enthalten zumindest eine Verbindung der Formel V, die dadurch gekennzeichnet ist, dass mindestens drei benachbarte Reste der Reste $R^1$ bis $R^4$ stehen für OH, wobei vorzugsweise die Reste $R^1$ bis $R^3$ für OH stehen.

Die erfindungsgemäßen Zubereitungen können darüber hinaus weitere übliche hautschonende oder hautpflegende Wirkstoffe enthalten. Dies können prinzipiell alle den Fachmann bekannten Wirkstoffe sein.

Besonders bevorzugte Wirkstoffe sind beispielsweise auch sogenannte kompatible Solute. Es handelt sich dabei um Substanzen, die an der Osmoregulation von Pflanzen oder Mikroorganismen beteiligt sind und aus diesen Organismen isoliert werden können. Unter den Oberbegriff kompatible Solute werden dabei auch die in der Deutschen Patentanmeldung DE-A-10133202 beschriebenen Osmolyte gefasst. Geeignete Osmolyte sind beispielsweise die Polyole, Methylamin-Verbindungen und Aminosäuren sowie jeweils deren Vorstufen. Als Osmolyte werden im Sinne der Deutschen Patentanmeldung DE-A-10133202 insbesondere Substanzen aus der Gruppe der Polyole, wie beispielsweise myo-Inositol, Mannitol oder Sorbitol und/oder einer oder mehrere der nachfolgend genannten osmolytisch wirksamen Stoffe verstanden:

> Taurin, Cholin, Betain, Phosphorylcholin, Glycerophosphorylcholine, Glutamin, Glycin, $\alpha$-Alanin, Glutamat, Aspartat, Prolin, und Taurin. Vorstufen dieser Stoffe sind beispielsweise Glucose, Glucose-Polymere, Phosphatidylcholin, Phosphatidylinositol, anorganische Phosphate, Proteine, Peptide und Polyaminsäuren. Vorstufen sind z. B. Verbindungen, die durch metabolische Schritte in Osmolyte umgewandelt werden.

Vorzugsweise werden erfindungsgemäß als kompatible Solute Substanzen gewählt aus der Gruppe bestehend aus Pyrimidincarbonsäuren (wie Ectoin und Hydroxyectoin), Prolin, Betain, Glutamin, cyclisches Diphosphoglycerat, N.-Acetylornithin, Trimethylamine-N-oxid Di-myoinositol-phosphat (DIP), cyclisches 2,3-diphosphoglycerat (cDPG), 1,1-Diglycerin-Phosphat (DGP), $\beta$-Mannosylglycerat (Firoin), $\beta$-Mannosylglyceramid (Firoin-A) oder/und Di-mannosyl-di-inositolphosphat (DMIP) oder ein optisches Isomer, Derivat, z.B. eine Säure, ein Salz oder Ester dieser Verbindungen oder Kombinationen davon eingesetzt.

Dabei sind unter den Pyrimidincarbonsäuren insbesondere Ectoin ((S)-1,4,5,6-Tetrahydro-2-methyl-4-pyrimidincarbonsäure) und Hydroxyectoin ((S,S)-1,4,5,6-Tetrahydro-5-hydroxy-2-methyl-4-pyrimidincarbonsäure und deren Derivate zu nennen. Diese Verbindungen stabilisieren Enzyme und andere Biomoleküle in wässrigen Lösungen und organischen Lösungsmitteln. Weiter stabilisieren sie insbesondere Enzyme gegen denaturierende Bedingungen, wie Salze, extreme pH-Werte, Tenside, Harnstoff, Guanidiniumchlorid und andere Verbindungen.

Ectoin und Ectoin-Derivate wie Hydroxyectoin können vorteilhaft in Arzneimitteln verwendet werden. Insbesondere kann Hydroxyectoin zur Herstellung eines Arzneimittels zur Behandlung von Hauterkrankungen eingesetzt werden. Andere Einsatzgebiete des Hydroxyectoins und anderer Ectoin-Derivate liegen typischerweise in Gebieten in denen z.B. Trehalose als Zusatzstoff verwendet wird. So können Ectoin-Derivate, wie Hydroxyectoin, als Schutzstoff in getrockneten Hefe- und Bakterienzellen Verwendung finden. Auch pharmazeutische Produkte wie nicht glykosylierte, pharmazeutische wirksame Peptide und Proteine z.B. t-PA können mit Ectoin oder seinen Derivaten geschützt werden.

Unter den kosmetischen Anwendungen ist insbesondere die Verwendung von Ectoin und Ectoin-Derivaten zur Pflege von gealterter, trockener oder gereizter Haut zu nennen. So wird in der europäischen Patentanmeldung EP-A-0 671 161 insbesondere beschrieben, dass Ectoin und Hydroxyectoin in kosmetischen Zubereitungen wie Pudern, Seifen, tensidhaltigen Reinigungsprodukten, Lippenstiften, Rouge, Make-Ups, Pflegecremes und Sonnenschutzpräparaten eingesetzt werden.

Dabei wird vorzugsweise eine Pyrimidincarbonsäure gemäß der unten stehenden Formel VI eingesetzt,

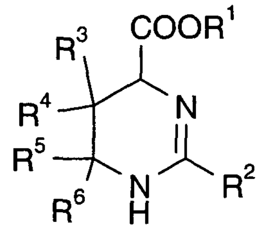

VI

worin $R^1$ ein Rest H oder $C_{1-8}$-Alkyl, $R^2$ ein Rest H oder $C_{1-4}$-Alkyl und $R^3$, $R^4$, $R^5$ sowie $R^6$ jeweils unabhängig voneinander ein Rest aus der Gruppe H, OH, $NH_2$ und $C_{1-4}$-Alkyl sind. Bevorzugt werden Pyrimidincarbonsäuren eingesetzt, bei denen $R^2$ eine Methyl- oder eine Ethylgruppe ist und $R^1$ bzw. $R^5$ und $R^6$ H sind. Insbesondere bevorzugt werden die Pyrimidincarbonsäuren Ectoin ((S)-1,4,5,6-Tetrahydro-2-methyl-4-pyrimidin-carbon-säure) und Hydroxyectoin ((S, S)-1,4,5,6-Tetrahydro-5-hydroxy-2-methyl-4-pyrimidin-carbonsäure) eingesetzt. Dabei enthalten die erfindungsgemäßen Zubereitungen derartige Pyrimidincarbonsäuren vorzugsweise in Mengen bis zu 15 Gew.-%.

Erfindungsgemäß insbesondere bevorzugt ist es dabei, wenn die kompatiblen Solute ausgewählt sind aus Dimyo-inositol-phosphat (DIP), cyclisches 2,3-diphosphoglycerat (cDPG), 1,1- Diglycerin-Phosphat (DGP), ß-Mannosylglycerat (Firoin), ß- Mannosylglyceramid (Firoin-A) oder/und Di-mannosyl-di-inositolphosphat (DMIP), Ectoin, Hydroxyectoin oder Mischungen davon.

Alle Verbindungen oder Komponenten, die in den Zubereitungen verwendet werden können, sind entweder bekannt und käuflich erwerbbar oder können nach bekannten Verfahren synthetisiert werden und können in der üblichen Weise in kosmetische oder dermatologische Zubereitungen eingearbeitet werden. Geeignet sind Zubereitungen für eine äußerliche Anwendung, beispielsweise als Creme, Lotion, Gel, oder als Lösung, die auf die Haut aufgesprüht werden kann. Für eine innerliche Anwendung sind Darreichungsformeln wie Kapseln, Dragees, Pulver, Tabletten-Lösungen

oder Lösungen geeignet.

Als Anwendungsform der erfindungsgemäßen Zubereitungen seien z.B. genannt: Lösungen, Suspensionen, Emulsionen, PIT-Emulsionen, Pasten, Salben, Gele, Cremes, Lotionen, Puder, Seifen, tensidhaltige Reinigungspräparate, Öle, Aerosole und Sprays. Weitere Anwendungsformen sind z.B. Sticks, Shampoos und Duschbäder. Der Zubereitung können beliebige übliche Trägerstoffe, Hilfsstoffe und gegebenenfalls weitere Wirkstoffe zugesetzt werden.

Vorzuziehende Hilfsstoffe stammen aus der Gruppe der Konservierungsstoffe, Antioxidantien, Stabilisatoren, Lösungsvermittler, Vitamine, Färbemittel, Geruchsverbesserer.

Salben, Pasten, Cremes und Gele können die üblichen Trägerstoffe enthalten, z.B. tierische und pflanzliche Fette, Wachse, Paraffine, Stärke, Traganth, Cellulosederivate, Polyethylenglykole, Silicone, Bentonite, Kieselsäure, Talkum und Zinkoxid oder Gemische dieser Stoffe.

Puder und Sprays können die üblichen Trägerstoffe enthalten, z.B. Milchzucker, Talkum, Kieselsäure, Aluminiumhydroxid, Calciumsilikat und Polyamid-Pulver oder Gemische dieser Stoffe. Sprays können zusätzlich die üblichen Treibmittel, z.B. Chlorfluorkohlenwasserstoffe, Propan/Butan oder Dimethylether, enthalten.

Lösungen und Emulsionen können die üblichen Trägerstoffe wie Lösungsmittel, Lösungsvermittler und Emulgatoren, z.B. Wasser, Ethanol, Iso-propanol, Ethylcarbonat, Ethlyacetat, Benzylalkohol, Benzylbenzoat, Propylenglykol, 1,3-Butylglykol, Öle, insbesondere Baumwollsaatöl, Erdnussöl, Maiskeimöl, Olivenöl, Rizinusöl und Sesamöl, Glycerinfettsäureester, Polyethylenglykole und Fettsäureester des Sorbitans oder Gemische dieser Stoffe enthalten.

Suspensionen können die üblichen Trägerstoffe wie flüssige Verdünnungsmittel, z.B. Wasser, Ethanol oder Propylenglykol, Suspendiermittel, z.B. ethoxylierte Isostearylalkohole, Polyoxyethylensorbitester und Polyoxyethylensorbitanester, mikrokristalline Cellulose, Aluminiummetahydroxid, Bentonit, Agar-Agar und Traganth oder Gemische dieser Stoffe enthalten.

Seifen können die üblichen Trägerstoffe wie Alkalisalze von Fettsäuren, Salze von Fettsäurehalbestern, Fettsäureeiweißhydrolysaten, Isothionate, Lanolin, Fettalkohol, Pflanzenöle, Pflanzenextrakte, Glycerin, Zucker oder Gemische dieser Stoffe enthalten.

Tensidhaltige Reinigungsprodukte können die üblichen Trägerstoffe wie Salze von Fettalkoholsulfaten, Fettalkoholethersulfaten, Sulfobernsteinsäurehalbestern, Fettsäureeiweißhydrolysaten, Isothionate, Imidazoliniumderivate, Methyltaurate, Sarkosinate, Fettsäureamidethersulfate, Alkylamidobetaine, Fettalkohole, Fettsäureglyceride, Fettsäurediethanolamide, pflanzliche und synthetische Öle, Lanolinderivate, ethoxylierte Glycerinfettsäureester oder Gemische dieser Stoffe enthalten.

Gesichts- und Körperöle können die üblichen Trägerstoffe wie synthetische Öle wie Fettsäureester, Fettalkohole, Silikonöle, natürliche Öle wie Pflanzenöle und ölige Pflanzenauszüge, Paraffinöle, Lanolinöle oder Gemische dieser Stoffe enthalten.

Weitere typische kosmetische Anwendungsformen sind auch Lippenstifte, Lippenpflegestifte, Mascara, Eyeliner, Lidschatten, Rouge, Puder-, Emulsions- und Wachs-Make up sowie Sonnenschutz-, Prä-Sun- und After-Sun-Präparate.

Zu den bevorzugten erfindungsgemäßen Zubereitungsformen gehören insbesondere Emulsionen.

Erfindungsgemäße Emulsionen sind vorteilhaft und enthalten z. B. die genannten Fette, Öle, Wachse und anderen Fettkörper, sowie Wasser und einen Emulgator, wie er üblicherweise für einen solchen Typ der Zubereitung verwendet wird.

Die Lipidphase kann vorteilhaft gewählt werden aus folgender Substanzgruppe:

- Mineralöle, Mineralwachse
- Öle, wie Triglyceride der Caprin- oder der Caprylsäure, ferner natürliche Öle wie z. B. Rizinusöl;
- Fette, Wachse und andere natürliche und synthetische Fettkörper, vorzugsweise Ester von Fettsäuren mit Alkoholen niedriger C-Zahl, z.B. mit Isopropanol, Propylenglykol oder Glycerin, oder Ester von Fett-Ikoholen mit Alkansäuren niedriger C-Zahl oder mit Fettsäuren;
- Silikonöle wie Dimethylpolysiloxane, Diethylpolysiloxane, Diphenylpolysiloxane sowie Mischformen daraus.

Die Ölphase der Emulsionen, Oleogele bzw. Hydrodispersionen oder Lipodispersionen im Sinne der vorliegenden Erfindung wird vorteilhaft gewählt aus der Gruppe der Ester aus gesättigtem und/oder ungesättigten, verzweigten und/oder unverzweigten Alkancarbonsäuren einer Kettenlänge von 3 bis 30 C-Atomen und gesättigten und/oder ungesättigten, verzweigten und/oder unverzweigten Alkoholen einer Kettenlänge von 3 bis 30 C-Atomen, aus der Gruppe der Ester aus aromatischen Carbonsäure und gesättigten und/oder ungesättigten, verzweigten und/oder unverzweigten Alkoholen einer Kettenlänge von 3 bis 30 C-Atomen. Solche Esteröle können dann vorteilhaft gewählt werden aus der Gruppe Isopropylmyristat, Isopropylpalmitat, Isopropylstearat, Isopropyloleat, n-Butylstearat, n-Hexyllaurat, n-Decyloleat, Isooctylstearat, Isononylstearat, Isononylisononanoat, 2-Ethylhexylpalmitat, 2-Ethylhexyllaurat, 2-Hexaldecylstearat, 2-Octyldodecylpalmitat, Oleyloleat, Oleylerucat, Erucyloleat, Erucylerucat sowie synthetische, halbsynthetische und natürliche Gemische solcher Ester, z. B. Jojobaöl.

Ferner kann die Ölphase vorteilhaft gewählt werden aus der Gruppe der verzweigten und unverzweigten Kohlenwasserstoffe und -wachse, der Silikonöle, der Dialkylether, der Gruppe der gesättigten oder ungesättigten, verzweigten oder unverzweigten Alkohole, sowie der Fettsäuretriglyceride, namentlich der Triglycerinester gesättigter und/oder ungesättigter, verzweigter und/oder unverzweigter Alkancarbonsäuren einer Kettenlänge von 8 bis 24, insbesondere 12-18 C-Atomen. Die Fettsäuretriglyceride können beispielsweise vorteilhaft gewählt werden aus der Gruppe der synthetischen, halbsynthetischen und natürlichen Öle, z. B. Olivenöl, Sonnenblumenöl, Sojaöl, Erdnussöl, Rapsöl, Mandelöl, Palmöl, Kokosöl, Palmkernöl und dergleichen mehr.

Auch beliebige Abmischungen solcher Öl- und Wachskomponenten sind vorteilhaft im Sinne der vorliegenden Erfindung einzusetzen. Es kann auch gegebenenfalls vorteilhaft sein, Wachse, beispielsweise Cetylpalmitat, als alleinige Lipidkomponente der Ölphase einzusetzen.

Vorteilhaft wird die Ölphase gewählt aus der Gruppe 2-Ethylhexylisostearat, Octyldodecanol, Isotridecylisononanoat, Isoeicosan, 2-Ethylhexylcocoat, $C_{12-15}$-Alkylbenzoat, Capryl-Caprinsäure-triglycerid, Dicaprylether.

Besonders vorteilhaft sind Mischungen aus $C_{12-15}$-Alkylbenzoat und 2-Ethylhexylisostearat, Mischungen aus $C_{12-15}$-Alkylbenzoat und Isotridecylisononanoat sowie Mischungen aus $C_{12-1,5}$-Alkylbenzoat, 2-Ethylhexylisostearat und Isotridecylisononanoat.

Von den Kohlenwasserstoffen sind Paraffinöl, Squalan und Squalen vorteilhaft im Sinne der vorliegenden Erfindung zu verwenden.

Vorteilhaft kann auch die Ölphase ferner einen Gehalt an cyclischen oder linearen Silikonölen aufweisen oder vollständig aus solchen Ölen bestehen, wobei allerdings bevorzugt wird, außer dem Silikonöl oder den Silikonölen einen zusätzlichen Gehalt an anderen Ölphasenkomponenten zu verwenden.

Vorteilhaft wird Cyclomethicon (Octamethylcyclotetrasiloxan) als erfindungsgemäß zu verwendendes Silikonöl eingesetzt. Aber auch andere Silikonöle sind vorteilhaft im Sinne der vorliegenden Erfindung zu verwenden, beispielsweise Hexamethylcyclotrisiloxan, Polydimethylsiloxan, Poly(methylphenylsiloxan).

Besonders vorteilhaft sind ferner Mischungen aus Cyclomethicon und Isotridecylisononanoat, aus Cyclomethicon und 2-Ethylhexylisostearat.

Die wässrige Phase der erfindungsgemäßen Zubereitungen enthält gegebenenfalls vorteilhaft Alkohole, Diole oder Polyole niedriger C-Zahl, sowie deren Ether, vorzugsweise Ethanol, Isopropanol, Propylenglykol, Glycerin, Ethylenglykol, Ethylenglykolmonoethyl- oder -monobutylether, Propylenglykolmonomethyl, -monoethyl- oder -monobutylether, Diethylenglykolmonomethyl- oder -monoethylether und analoge Produkte, ferner Alkohole niedriger C-Zahl, z. B. Ethanol, Isopropanol, 1,2-Propandiol, Glycerin sowie insbesondere ein oder mehrere Verdickungsmittel, welches oder welche vorteilhaft gewählt werden können aus der Gruppe Siliciumdioxid, Aluminiumsilikate, Polysaccharide bzw. deren Derivate, z.B. Hyaluronsäure, Xanthangummi, Hydroxypropylmethylcellulose, besonders vorteilhaft aus der Gruppe der Polyacrylate, bevorzugt ein Polyacrylat aus der Gruppe der sogenannten Carbopole, beispielsweise Carbopole der Typen 980, 981, 1382, 2984, 5984, jeweils einzeln oder in Kombination.

Insbesondere wird ein Gemisch der vorstehend genannten Lösemittel verwendet. Bei alkoholischen Lösemitteln kann Wasser ein weiterer Bestandteil sein.

Erfindungsgemäße Emulsionen sind vorteilhaft und enthalten z. B. die genannten Fette, Öle, Wachse und anderen Fettkörper, sowie Wasser und einen Emulgator, wie er üblicherweise für einen solchen Typ der Formulierung verwendet wird.

In einer bevorzugten Ausführungsform enthalten die erfindungsgemäßen Zubereitungen hydrophile Tenside.

Die hydrophilen Tenside werden bevorzugt gewählt aus der Gruppe der Alkylglucoside, der Acyllactylate, der Betaine sowie der Cocoamphoacetate.

Die Alkylglucoside werden ihrerseits vorteilhaft gewählt aus der Gruppe der Alkylglucoside, welche sich durch die Strukturformel

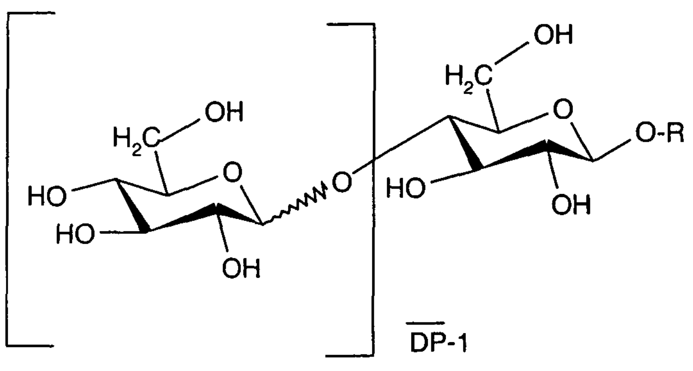

auszeichnen, wobei R einen verzweigten oder unverzweigten Alkylrest mit 4 bis 24 Kohlenstoffatomen darstellt und wobei $\overline{DP}$ einen mittleren Glucosylierungsgrad von bis zu 2 bedeutet.

Der Wert $\overline{DP}$ repräsentiert den Glucosidierungsgrad der erfindungsgemäß verwendeten Alkylglucoside und ist definiert als

$$\overline{DP} = \frac{p_1}{100} \cdot 1 + \frac{p_2}{100} \cdot 2 + \frac{p_3}{100} \cdot 3 + \ldots = \sum \frac{p_i}{100} \cdot i$$

Dabei stellen $p_1$, $p_2$, $p_3$ ... bzw. $p_i$ den Anteil der einfach, zweifach dreifach ... i-fach glucosylierten Produkte in Gewichtsprozenten dar. Erfindungsgemäß vorteilhaft werden Produkte mit Glucosylierungsgraden von 1-2, insbesondere vorteilhaft von 1, 1 bis 1,5, ganz besonders vorteilhaft von 1,2-1,4, insbesondere von 1,3 gewählt.

Der Wert DP trägt den Umstand Rechnung, dass Alkylglucoside herstellungsbedingt in der Regel Gemische aus Mono- und Oligoglucosiden darstellen. Erfindungsgemäß vorteilhaft ist ein relativ hoher Gehalt an Monoglucosiden, typischerweise in der Größenordnung von 40-70 Gew.-%.

Erfindungsgemäß besonders vorteilhaft verwendete Alkylglylcoside werden gewählt aus der Gruppe Octylglucopyranosid, Nonylglucopyranosid, Decylglucopyranosid, Undecylglucopyranosid, Dodecylglucopyranosid, Tetradecylglucopyranosid und Hexadecylglucopyranosid.

Es ist ebenfalls von Vorteil, natürliche oder synthetische Roh- und Hilfsstoffe bzw. Gemische einzusetzen, welche sich durch einen wirksamen Gehalt an den erfindungsgemäß verwendeten Wirkstoffen auszeichnen, beispielsweise Plantaren® 1200 (Henkel KGaA), Oramix® NS 10 (Seppic).

Die Acyllactylate werden ihrerseits vorteilhaft gewählt aus der Gruppe der Substanzen, welche sich durch die Strukturformel

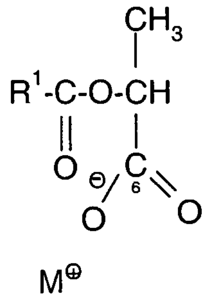

auszeichnen, wobei $R^1$ einen verzweigten oder unverzweigten Alkylrest mit 1 bis 30 Kohlenstoffatomen bedeutet und $M^+$ aus der Gruppe der Alkaliionen sowie der Gruppe der mit einer oder mehreren Alkyl- und/oder mit einer oder mehreren Hydroxyalkylresten substituierten Ammoniumionen gewählt wird bzw. dem halben Äquivalent eines Erdalkalions entspricht.

Vorteilhaft ist beispielsweise Natriumisostearyllactylat, beispielsweise das Produkt Pathionic® ISL von der Gesellschaft American Ingredients Company.

Die Betaine werden vorteilhaft gewählt aus der Gruppe der Substanzen, welche sich durch die Strukturformel

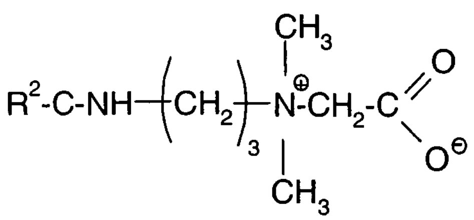

auszeichnen, wobei $R^2$ einen verzweigten oder unverzeigten Alkylrest mit 1 bis 30 Kohlenstoffatomen bedeutet.

Insbesondere vorteilhaft bedeutet $R^2$ einen verzweigten oder unverzweigten Alkylrest mit 6 bis 12 Kohlenstoffatomen.

Vorteilhaft ist beispielsweise Capramidopropylbetain, beispielsweise das Produkt Tego® Betain 810 von der Gesellschaft Th. Goldschmidt AG.

Als erfindungsgemäß vorteilhaftes Cocoamphoacetat wird beispielsweise Natriumcocoamphoacetat gewählt, wie es unter der Bezeichnung Miranol® Ultra C32 von der Gesellschaft Miranol Chemical Corp. erhältlich ist.

Die erfindungsgemäßen Zubereitungen sind vorteilhaft dadurch gekennzeichnet, dass das oder die hydrophilen Tenside in Konzentrationen von 0,01-20 Gew.-% bevorzugt 0,05-10 Gew.-%, besonders bevorzugt 0,1-5 Gew.-%, jeweils bezogen auf das Gesamtgewicht der Zusammensetzung, vorliegt oder vorliegen.

Zu Anwendung werden die erfindungsgemäßen kosmetischen und dermatologischen Zubereitungen in der für Kosmetika üblichen Weise auf die Haut und/oder die Haare in ausreichender Menge aufgebracht.

Erfindungsgemäße kosmetische und dermatologische Zubereitungen können in verschiedenen Formen vorliegen. So können sie z. B. eine Lösung, eine wasserfreie Zubereitung, eine Emulsion oder Mikroemulsion vom Typ Wasser-in-Öl (W/O) oder vom Typ Öl-in-Wasser (O/W), eine multiple Emulsion, beispielsweise vom Typ Wasser-in-Öl-in-Wasser (W/O/W), ein Gel, einen festen Stift, eine Salbe oder auch ein Aerosol darstellen. Es ist auch vorteilhaft, Ectoine in verkapselter Form darzureichen, z. B. in Kollagenmatrices und anderen üblichen Verkapselungsmaterialien, z. B. als Celluloseverkapselungen, in Gelatine, Wachsmatrices oder liposomal verkapselt. Insbesondere Wachsmatrices wie sie in der DE-OS 43 08 282 beschrieben werden, haben sich als günstig herausgestellt. Bevorzugt werden Emulsionen. O/W-Emulsionen werden besonders bevorzugt. Emulsionen, W/O-Emulsionen und O/W-Emulsionen sind in üblicher Weise erhältlich.

Als Emulgatoren können beispielsweise die bekannten W/O- und O/W-Emulgatoren verwendet werden. Es ist vorteilhaft, weitere übliche Co-emulgatoren in den erfindungsgemäßen bevorzugten O/W-Emulsionen zu verwenden.

Erfindungsgemäß vorteilhaft werden als Co-Emulgatoren beispielsweise O/W-Emulgatoren gewählt, vornehmlich aus der Gruppe der Substanzen mit HLB-Werten von 11-16, ganz besonders vorteilhaft mit HLB-Werten von 14,5-15,5, sofern die O/W-Emulgatoren gesättigte Reste R und R' aufweisen. Weisen die O/W-Emulgatoren ungesättigte Reste R und/oder R' auf, oder liegen Isoalkylderivate vor, so kann der bevorzugte HLB-Wert solcher Emulgatoren auch niedriger oder darüber liegen.

Es ist von Vorteil, die Fettalkoholethoxylate aus der Gruppe der ethoxylierten Stearylalkhole, Cetylalkohole, Cetylstearylalkohole (Cetearylalkohole) zu wählen. Insbesondere bevorzugt sind: Polyethylenglycol(13)stearylether (Steareth-13), Polyethylenglycol(14)stearylether (Steareth-14), Polyethylenglycol(15)stearylether (Steareth-15), Polyethylenglycol(16)stearylether (Steareth-16), Polyethylenglycol(17)-stearylether (Steareth-17),Polyethylenglycol(18)stearylether (Steareth-18), Polyethylenglycol(19)stearylether (Steareth-19), Polyethylenglycol(20)-stearylether (Steareth-20), Polyethylenglycol(12)isostearylether (Isosteareth-12), Polyethylenglycol(13)isostearylether (Isosteareth-13), Polyethylenglycol(14)isostearylether (Isosteareth-14), Polyethylenglycol(15)isostearylether (Isosteareth-15), Polyethylenglycol(16)-isostearylether (Isosteareth-16), Polyethylenglycol(17)isostearylether (Isosteareth-17), Polyethylenglycol(18)isostearylether (Isosteareth-18), Polyethylenglycol(19)isostearylether (Isosteareth-19), Polyethylenglycol(20)isostearylether (Isosteareth-20), Polyethylenglycol(13)cetylether (Ceteth-13), Polyethylenglycol(14)cetylether (Ceteth-14), Polyethylenglycol(15)cetylether (Ceteth-15), Polyethylenglycol(16)cetylether (Ceteth-16), Polyethylenglycol(17)cetylether (Ceteth-17), Polyethylenglycol(18)-cetylether (Ceteth-18), Polyethylenglycol(19)cetylether (Ceteth-19), Polyethylen-glycol(20)cetylether (Ceteth-20), Polyethylenglycol(13)isocetylether (Isoceteth-13), Polyethylenglycol(14)isocetylether (Isoceteth-14), Polyethylenglycol(15)isocetylether (Isoceteth-15), Polyethylenglycol(16)isocetylether (Isoceteth-16), Polyethylenglycol(17)-isocetylether (Isoceteth-17), Polyethylenglycol(18)isocetylether (Isoceteth-18), Polyethylenglycol(19)isocetylether (Isoceteth-19), Polyethylen-glycol(20)isocetylether (Isoceteth-20), Polyethylenglycol(12)oleylether (Oleth-12), Polyethylenglycol(13)oleylether (Oleth-13), Polyethylenglycol(14)oleylether (Oleth-14), Polyethylenglycol(15)oleylether (Oleth-15), Polyethylenglycol(12)laurylether (Laureth-12), Polyethylenglycol(12)-isolaurylether (Isolaureth-12), Polyethylenglycol(13)cetylstearylether (Ceteareth-13), Polyethylenglycol(14)cetylstearylether (Ceteareth-14), Polyethylenglycol(15)cetylstearylether (Ceteareth-15), Polyethylenglycol(16)cetylstearylether (Ceteareth-16), Polyethylenglycol(17)-cetylstearylether (Ceteareth-17), Polyethylenglycol(18)cetylstearylether (Ceteareth-18), Polyethylenglycol(19)cetylstearylether (Ceteareth-19), Polyethylenglycol(20)cetylstearylether (Ceteareth-20).

Es ist ferner von Vorteil, die Fettsäureethoxylate ausfolgender Gruppe zu wählen:

Polyethylenglycol(20)stearat, Polyethylenglycol(21 )stearat,
Polyethylenglycol(22)stearat, Polyethylenglycol(23)stearat,
Polyethylenglycol(24)stearat, Polyethylenglycol(25)stearat,
Polyethylenglycol(12)isostearat, Polyethylenglycol(13)isostearat,
Polyethylenglycol(14)isostearat, Polyethylenglycol(15)isostearat,
Polyethylenglycol(16)isostearat, Polyethylenglycol(17)isostearat,
Polyethylenglycol(18)isostearat, Polyethylenglycol(19)isostearat,
Polyethylenglycol(20)isostearat, Polyethylenglycol(21)isostearat,
Polyethylenglycol(22)isostearat, Polyethylenglycol(23)isostearat,
Polyethylenglycol(24)isostearat, Polyethylenglycol(25)isostearat,
Polyethylenglycol(12)oleat, Polyethylenglycol(13)oleat,

Polyethylenglycol(14)oleat, Polyethylenglycol(15)oleat,
Polyethylenglycol(16)oleat, Polyethylenglycol(17)oleat,
Polyethylenglycol(18)oleat, Polyethylenglycol(19)oleat,
Polyethylenglycol(20)oleat,

Als ethoxylierte Alkylethercarbonsäure bzw. deren Salz kann vorteilhaft das Natriumlaureth-11-carboxylat verwendet werden. Als Alkylethersulfat kann Natrium Laureth1-4sulfat vorteilhaft verwendet werden. Als ethoxyliertes Cholesterinderivat kann vorteilhaft Polyethylenglycol(30)Cholesterylether verwendet werden. Auch Polyethylenglycol(25)Sojasterol hat sich bewährt. Als ethoxylierte Triglyceride können vorteilhaft die Polyethylenglycol(60) Evening Primrose Glycerides verwendet werden (Evening Primrose = Nachtkerze).

Weiterhin ist von Vorteil, die Polyethylenglycolglycerinfettsäureester aus der Gruppe Polyethylenglycol(20)glyceryllaurat, Polyethylenglycol(21)glyceryllaurat, Polyethylenglycol(22)glyceryllaurat, Polyethylenglycol(23)glyceryllaurat, Polyethylenglycol(6)glycerylcaprat/cprinat, Polyethylenglycol-(20)glyceryloleat, Polyethylenglycol(20)glycerylisostearat, Polyethylenglycol(18)glyceryloleat(cocoat zu wählen.

Es ist ebenfalls günstig, die Sorbitanester aus der Gruppe Polyethylenglycol(20)sorbitanmonolaurat, Polyethylenglycol(20)sorbitanmonostearat, Polyethylenglycol(20)sorbitanmonoisostearat, Polyethylenglycol(20)sorbitanmonopalmitat, Polyethylenglycol(20)sorbitanmonooleat zu wählen.

Als fakultative, dennoch erfindungsgemäß gegebenenfalls vorteilhafte W/O-Emulgatoren können eingesetzt werden:

Fettalkohole mit 8 bis 30 Kohlenstoffatomen, Monoglycerinester gesättigter und/oder ungesättigter, verzweigter und/oder unverzweigter Alkancarbonsäuren einer Kettenlänge von 8 bis 24, insbesondere 12-18 C-Atome, Diglycerinester gesättigter und/oder ungesättigter, verzweigter und/oder unverzweigter Alkancarbonsäuren einer Kettenlänge von 8 bis 24, insbesondere 12-18 C-Atomen, Monoglycerinether gesättigter und/oder ungesättigter, verzweigter und/oder unverzweigter Alkohole einer Kettenlänge von 8 bis 24, insbesondere 12-18 C-Atomen, Diglycerinether gesättigter und/oder ungesättigter, verzweigter und/oder unverzweigter Alkhole einer Kettenlänge von 8 bis 24, insbesondere 12-18 C-Atomen, Propylenglycolester gesättigter und/oder ungesättigter, verzweigter und/oder unverzweigter Alkancarbonsäuren einer Kettenlänge von 8 bis 24, insbesondere 12-18 C-Atomen sowie Sorbitanester gesättigter und/oder ungesättigter, verzweigter und/oder unverzweigter Alkancarbonsäuren einer Kettenlänge von 8 bis 24, insbesondere 12-18 C-Atomen.

Insbesondere vorteilhafte W/O-Emulgatoren sind Glycerylmonostearat, Glycerylmonoisostearat, Glycerylmonomyristat, Glycerylmonooleat, Diglycerylmonostearat, Diglycerylmonoisostearat, Propylenglycolmonostearat, Propylenglycolmonoisostearat, Propylenglycolmonocaprylat, Propylenglycolmonolaurat, Sorbitanmonoisostearat, Sorbitanmonolaurat, Sorbitanmonocaprylat, Sorbitanmonoisooleat, Saccharosedistearat, Cetylalkohol, Stearylalkohol, Arachidylalkohol, Behenylalkohol, Isobehenylalkohol, Selachylalkohol, Chimylalkohol, Polyethylenglycol(2)stearylether (Steareth-2), Glycerylmonolaurat, Glycerylmonocaprinat, Glycerylmonocaprylat oder PEG-30-dipolyhydroxystearat.

Erfindungsgemäß bevorzugte Zubereitungen eignen sich zur Abwehr von Insekten, sie eignen sich jedoch auch mit den entsprechenden Zusatzstoffen, wie zuvor beschrieben, zum Schutz menschlicher Haut gegen Alterungsprozesse sowie vor oxidativem Stress, d.h. gegen Schädigungen durch Radikale, wie sie z.B. durch Sonneneinstrahlung, Wärme oder andere Einflüsse erzeugt werden. Dabei liegt eine solche Zubereitung in verschiedenen, für diese Anwendung üblicherweise verwendeten Darreichungsformen vor. So kann sie insbesondere als Lotion oder Emulsion, wie als Creme oder Milch (O/W, W/O, O/W/O, W/O/W), in Form ölig-alkoholischer, ölig-wässriger oder wässrigalkoholischer Gele bzw. Lösungen, als feste Stifte vorliegen oder als Aerosol konfektioniert sein.

Die Zubereitung kann kosmetische Adjuvantien enthalten, welche in dieser Art von Zubereitungen üblicherweise verwendet werden, wie z.B. Verdickungsmittel, weichmachende Mittel, Befeuchtungsmittel, grenzflächenaktive Mittel, Emulgatoren, Konservierungsmittel, Mittel gegen Schaumbildung, Parfums, Wachse, Lanolin, Treibmittel, Farbstoffe und/oder Pigmente, welche das Mittel selbst oder die Haut färben, und andere in der Kosmetik gewöhnlich verwendete Ingredienzien.

Man kann als Dispersions- bzw. Solubilisierungsmittel ein Öl, Wachs oder sonstigen Fettkörper, einen niedrigen Monoalkohol oder ein niedriges Polyol oder Mischungen davon verwenden. Zu den besonders bevorzugten Monoalkoholen oder Polyolen zählen Ethanol, i-Propanol, Propylenglykol, Glycerin und Sorbit.

Eine bevorzugte Ausführungsform der Erfindung ist eine Emulsion, welche als Schutzcreme oder -milch vorliegt und beispielsweise Fettalkohole, Fettsäuren, Fettsäureester, insbesondere Triglyceride von Fettsäuren, Lanolin, natürliche und synthetische Öle oder Wachse und Emulgatoren in Anwesenheit von Wasser enthält.

Weitere bevorzugte Ausführungsformen stellen ölige Lotionen auf Basis von natürlichen oder synthetischen Ölen und Wachsen, Lanolin, Fettsäureestern, insbesondere Triglyceriden von Fettsäuren, oder öligalkoholische Lotionen auf Basis eines Niedrigalkohols, wie Ethanol, oder eines Glycerols, wie Propylenglykol, und/oder eines Polyols, wie

Glycerin, und Ölen, Wachsen und Fettsäureestern, wie Triglyceriden von Fettsäuren, dar.

Die erfindungsgemäße Zubereitung kann auch als alkoholisches Gel vorliegen, welches einen oder mehrere Niedrigalkohole oder -polyole, wie Ethanol, Propylenglykol oder Glycerin, und ein Verdickungsmittel, wie Kieselerde umfaßt. Die ölig-alkoholischen Gele enthalten außerdem natürliches oder synthetisches Öl oder Wachs.

Die festen Stifte bestehen aus natürlichen oder synthetischen Wachsen und Ölen, Fettalkoholen, Fettsäuren, Fettsäureestern, Lanolin und anderen Fettkörpern.

Ist eine Zubereitung als Aerosol konfektioniert, verwendet man in der Regel die üblichen Treibmittel, wie Alkane, Fluoralkane und Chlorfluoralkane.

Ein weiterer Gegenstand der vorliegenden Erfindung ist ein Verfahren zur Herstellung einer Zubereitung, dadurch gekennzeichnet, dass ein Insektenabwehrmittel als Wirkungsverstärker, wie zuvor beschrieben, jedoch insbesondere bevorzugt 2-(2-Hydroxyethyl)-1-methylpropylester der 1-Piperidincarboxylsäure und mindestens ein zweites Insektenabwehrmittel, wie zuvor beschrieben, mit einem kosmetisch oder dermatologisch geeignetem Träger vermischt wird.

Die erfindungsgemäßen Zubereitungen können dabei mit Hilfe von Techniken hergestellt werden, die dem Fachmann wohl bekannt sind.

Das Vermischen kann ein Lösen, Emulgieren oder Dispergieren beispielsweise des 2-(2-Hydroxyethyl)-1-methylpropylesters der 1-Piperidincarboxylsäure und des mindestens zweiten Insektenabwehrmittels, wie zuvor beschrieben, in dem Träger zur Folge haben.

## Beispiele

### Beispiel 1 Repellent Aktivität

Die Prüfung erfolgt nach einem bewährten Testverfahren des Schweizerischen Tropeninstitutes ("Cage Test"). Als Versuchstiere dienen etwa 300-400 weibliche und männliche (ca. 1:1) Gelbfiebermücken (Aedes aegypti) aus Laborzucht in einem Zuchtkäfig von 40 x 40 x 40 cm. Um sicher zu gehen, dass alle Mückenweibchen während der Testphase hungrig sind, wird der Testpopulation am Abend vor dem Testtag das Zuckerwasser entzogen. Testbeginn ist jeweils zwischen 8 und 10 Uhr vormittags. Die Expositionen finden bei Licht unter konstanten Bedingungen statt, 27°C und 70-80% relative Luftfeuchtigkeit.

Als Testrezeptur wird ein Spray folgender Zusammensetzung (INCI-Namen) eingesetzt:

| A | Gew.-% |
|---|---|
| Insektenabwehrmittel Mischung | gemäß Tabelle |
| PEG-8 | 5,0 |
| PPG-15 STEARYL ETHER | 3,0 |
| B | |
| ALCOHOL | 35,0 |
| METHYL PROPANEDIOL | 4,0 |
| POLYSORBATE 20 | 1,5 |
| AQUA (WATER) | ad 100 |

Die Phasen A und B werden getrennt bereitet und Phase B anschließend langsam in Phase A eingerührt.

Am Unterarm von 5 Versuchspersonen werden zwischen Handgelenk und Ellbogen jeweils 500-600 $cm^2$ mit der Versuchssubstanz behandelt. Ellbogen und Oberarm werden für die Expositionen mit einer vor Stichen schützenden Plastikmanschette abgedeckt. Die unbehandelte Hand wird mit dicken, luftdurchlässigen Handschuhen geschützt und dient so gleichzeitig als Kontrolle für die Stechfreudigkeit der Mücken.

Es wird ferner Sorge getragen, dass die behandelten Flächen während der Versuchszeit unberührt bleiben. Für den Test werden der Unterarm und die Hand stündlich in den Mückenkäfig gehalten und während 10 Minuten die Zahl der Stechmücken notiert,

a) welche durch den Handschuh zu stechen versuchen (positive Kontrolle)
b) welche die behandelte Fläche näher als 3 cm anfliegen
c) auf der behandelten Fläche länger als 2 Sekunden sitzen bleiben und
d) in die behandelte Fläche einstechen und Blut saugen.

Anmerkung: Bei den Parametern a und b handelt es sich um Schätzwerte, da eine exakte Bestimmung nicht

möglich ist.
Abgebrochen wird der Test dann, wenn die Versuchsperson die Belastung durch die Mückenstiche als zu unangenehm empfindet.

Kontrolle

Für die Bestimmung der Wirksamkeit der Testprodukte im Vergleich zu einer unbehandelten Testfläche wird eine Studie beigezogen, die unter identischen äußeren Bedingungen durchgeführt wurde. Bei dieser wurde mit einer reduzierten Mückenzahl, 20 Aedes aegypti Weibchen, gearbeitet, um die Stichzahl in erträglichem Rahmen zu halten. Zwanzig Testpersonen exponierten dabei einen Unterarm so lange, bis mit Sicherheit 3 Stiche erfolgt waren. Die effektive Expositionszeit wurde festgehalten und zusammen mit der effektiven Stichzahl für die Berechnung der pro Minute stechenden Mücken verwendet. Der so erhaltene Wert betrug im Mittel 8.44 stechende Mücken pro Minute.

**Auswertung und Interpretation:**

Die Fernhaltewirkung einer Substanz ergibt sich vor allem aus dem Verhältnis der auf dem Handschuh absitzenden stechlustigen Mücken zu den übrigen Werten. In der Nähe umherschwirrende oder gar absitzende Mücken sind für den Grad der empfundenen Belästigung mit von Bedeutung. Die Zahl der einstechenden Mücken ist für die zu bestimmende Dauer der Wirksamkeit und damit in den Tropen indirekt auch für die Infektionsgefahr der entscheidende Faktor.
Für die approximative Berechnung der Schutzwirkung in Prozent für die im vorliegenden Test eingesetzten Produkte, wird der aus der Kontrolle erhaltene Wert für 20 Mücken auf die rund 150 Mückenweibchen im aktuellen Test hochgerechnet (abgerundeter Kontrollwert x 7.5). Die mittlere Reduktion bezüglich Stechschutz als Folge der Wirkung der Testprodukte in Prozent für jeden Expositionszeitpunkt ergibt sich aus der mittleren Differenz zwischen dem im Test eruierten Wert und dem Kontrollwert.

$$\frac{\text{Kontrollwert} - (3\, x_{1\ \text{bis}\ n} : n)}{\text{Kontrollwert}} \leq 100\ (\%)$$

$x_i$ = Anzahl Ereignisse pro Minute = Anzahl Stiche pro Minute
n = Anzahl, der sich noch im Test befindenden Personen
Kontrollwert: Stiche pro Minute = 60

D.h. die Schutzwirkung ist umso besser, je näher der ermittelte Prozentwert bei 100 % liegt.

| Ansatz | Testperson | 1h | 2h | 3h | 4h | 5h |
|---|---|---|---|---|---|---|
| 20% IR3535® | 1 | 98% | | | | |
| 20% IR3535® | 2 | 97% | | | | |
| 20% IR3535® | 3 | 100% | 99% | 100% | 98% | |
| 20% IR3535® | 4 | 100% | 100% | 97% | | |
| 20% IR3535® | 5 | 98% | | | | |
| | | | | | | |
| 10% IR3535® | 1 | 95% | | | | |
| 10% IR3535® | 2 | 100% | 90% | | | |
| 10% IR3535® | 3 | 90% | | | | |
| 10% IR3535® | 4 | 88% | | | | |
| 10% IR3535® | 5 | 95% | | | | |
| | | | | | | |

(fortgesetzt)

| Ansatz | Testperson | 1h | 2h | 3h | 4h | 5h |
|---|---|---|---|---|---|---|
| 10% IR3535® + 5% Icaridin | 1 | 65% | | | | |
| 10% IR3535® + 5% Icaridin | 2 | <92% | | | | |
| 10% IR3535® + 5% Icaridin | 3 | 91% | | | | |
| 10% IR3535® + 5% Icaridin | 4 | 92% | | | | |
| 10% IR3535® + 5% Icaridin | 5 | 99% | 99% | | | |
| | | | | | | |
| 10% IR3535® + 3% Icaridin | 1 | 94% | | | | |
| 10% IR3535® + 3% Icaridin | 2 | 99% | 99% | | | |
| 10% IR3535®+3% Icaridin | 3 | 97% | | | | |
| 10% IR3535® + 3% Icaridin | 4 | 97% | | | | |
| 10% IR3535® + 3% Icaridin | 5 | <92% | | | | |
| | | | | | | |
| 10% IR3535® + 2% Icaridin | 1 | 100% | 100% | | | |
| 10% IR3535® + 2% Icaridin | 2 | 100% | 100% | | | |
| 10% IR3535® + 2% Icaridin | 3 | 100% | 99% | 100% | 99% | 99% |
| 10% IR3535® + 2% Icaridin | 4 | 77% | | 97% | | |
| 10% IR3535® + 2% Icaridin | 5 | 97% | | 100% | 97% | |

**Bestimmung der relativen Repellent-Wirkung:**

Die festgestellten Schutzfaktoren wurden über alle Testpersonen aufaddiert ( 100"% = 100, 90%= 90 etc). Der daraus resultierende Gesamtfaktor wird zwischen den Ansätzen in Relation gesetzt, wobei der Versuch mit 10% IR3535® als Normierungsgrundlage (= 100% relative Repellent Wirkung) dient.

Die angegebene Schutzzeit ergibt sich direkt aus den Messungen.

| Formulierung | Repellent Faktor | relative Repellent Wirkung (10 % IR3535® = 100 %) [%] | Schutzdauer [h] |
|---|---|---|---|
| 20% IR3535® | 987 | 177 | 3,5 |
| 10% IR3535® | 558 | 100 | 2,0 |
| 10% IR3535® + 5% Icaridin | 538 | 96 | 1,9 |
| 10% IR3535® + 3% Icaridin | 578 | 104 | 2,1 |
| 10% IR3535® + 2% Icaridin | 1268 | 227 | 4,5 |

In einer weiteren Versuchsreihe, nach der angegebenen Testmethode, werden folgende Daten erhalten:

| Formulierung | Repellent Faktor | relative Repellent Wirkung (15 % IR3535®=100 %) [%] | Schutzdauer [h] |
|---|---|---|---|
| 15% I R3535® | 1558 | 100 | 4,0 |
| 15% Icaridin | 1761 | 113 | 5,0 |

(fortgesetzt)

| Formulierung | Repellent Faktor | relative Repellent Wirkung (15 % IR3535®=100 %) [%] | Schutzdauer [h] |
|---|---|---|---|
| 15% IR3535® + 15% Icaridin | 2167 | 139 | 5,5 |

**Beispiel 2: Labortest zur Bestimmung der Wirksamkeit gegen adulte Stechmücken (Test mit Mäusen, *Aedes aegypti* und *Anopheles stephensi*)**

1. Zweck der Studie

Ziel dieser Studie ist die Bestimmung der Wirksamkeit und die Wirkdauer gegen Stechmücken einer Formulierung, die eine repellierende Wirksubstanzmischung enthält.
Die Studie wird mit haarlosen Mäusen als Wirtsorganismen durchgeführt.

2. Material und Methode

-Insekten

Die adulten Stechmücken (*Aedes aegypti* und *Anopheles stephensi*) stammen aus einer Laborzucht (Stamm: ORSTOM) die dafür bekannt ist auf Wirkstoffe aus der Gruppe der Insektizide zu reagieren.

- Methode

Als Wirtsorganismen für die Stechmücken werden haarlose Mäuse eingesetzt.
Jede Maus wird in einem Netzzylinder mit Augenschutz festgehalten. Die Mücken können durch die Maschen des Netzes stechen.
0.5 Gramm des zu testenden Produkts werden aufgetragen. Danach wird die Maus in einen Glaskäfig mit den Maßen 50x50x50 cm gesetzt. In diesem Käfig befinden sich mindesten 200 adulte Stechmücken, mit einem besonders hohen Anteil an Weibchen, die mindestens 2 Tage keine Blutmahlzeit gehabt hatten.
Die Mäuse werden jeweils für 5 Minuten im Käfig belassen. Dabei werden registriert:

- Anzahl der Stiche
- Anzahl der Landeversuche.

Dieser Vorgang wird alle 2 Stunden mit frischen Stechmücken wiederholt (T0, T2, T4, T6, T8, T10).
Der Test wird bei > 5 Stichen für die jeweilige Maus beendet.
Als Positivkontrolle zur Bestimmung des "Stechdrucks" werden unbehandelte Mäuse eingesetzt.
Mit jeweils 3 Mäusen werden drei Wiederholungen durchgeführt, d.h. das geprüfte Produkt ist insgesamt 9 mal geprüft.

3. Geprüftes Produkt

Alkoholisches Pumpspray mit der Zusammesetzung in Gew.-%:

| | |
|---|---|
| Alkohol denat. | 77.3 % |
| Methyl propanediol | 12,0 % |
| Ethylbutyacetylaminopropionate | 9,0 % |
| Hydroxyethyl isobutyl piperidine carboxylate | 1,0 % |
| Carapa guaianensis | 0,5 % |
| Parfum (Lavendel ACS 38298) | 0,5 % |

Ethylbutyacetylaminopropionate = IR3535®
Hydroxyethyl isobutyl piperidine carboxylate = Icaridin

Primärdaten für *Aedes Aegypti:* Prüfdauer bei T0 + x H (H = Stunden)

| | Maus | Wdh | T0 | | T0+ 2H | | T0+ 4H | | T0+ 6H | | T0+ 8H | | T0+ 10H | |
|---|---|---|---|---|---|---|---|---|---|---|---|---|---|---|
| | | | S | L | S | L | S | L | S | L | S | L | S | L |
| geprüftes Produkt | 1 | 1 | 0 | 0 | 0 | 0 | 0 | 0 | 0 | 0 | 0 | 0 | stop | stop |
| | | 2 | 0 | 0 | 0 | 0 | 0 | 0 | 0 | 0 | 0 | 1 | stop | stop |
| | | 3 | 0 | 0 | 0 | 0 | 0 | 0 | 0 | 0 | 0 | 0 | stop | stop |
| | 2 | 1 | 0 | 0 | 0 | 0 | 0 | 0 | 0 | 0 | 0 | 0 | stop | stop |
| | | 2 | 0 | 0 | 0 | 0 | 0 | 0 | 0 | 0 | 0 | 0 | stop | stop |
| | | 3 | 0 | 0 | 0 | 0 | 0 | 0 | 0 | 0 | 0 | 1 | stop | stop |
| | 3 | 1 | 0 | 0 | 0 | 0 | 0 | 0 | 0 | 0 | 0 | 1 | stop | stop |
| | | 2 | 0 | 0 | 0 | 0 | 0 | 0 | 0 | 0 | 0 | 0 | stop | stop |
| | | 3 | 0 | 0 | 0 | 0 | 0 | 0 | 0 | 0 | 0 | 1 | stop | stop |
| unbehandelte Positiv Kontrolle | 1 | 1 | stop | stop | stop | stop | stop | stop | stop | stop | stop | stop | stop | stop |
| | | 2 | stop | stop | stop | stop | stop | stop | stop | stop | stop | stop | stop | stop |
| | | 3 | stop | stop | stop | stop | stop | stop | stop | stop | stop | stop | stop | stop |
| | 2 | 1 | stop | stop | stop | stop | stop | stop | stop | stop | stop | stop | stop | stop |
| | | 2 | stop | stop | stop | stop | stop | stop | stop | stop | stop | stop | stop | stop |
| | | 3 | stop | stop | stop | stop | stop | stop | stop | stop | stop | stop | stop | stop |
| | 3 | 1 | stop | stop | stop | stop | stop | stop | stop | stop | stop | stop | stop | stop |
| | | 2 | stop | stop | stop | stop | stop | stop | stop | stop | stop | stop | stop | stop |
| | | 3 | stop | stop | stop | stop | stop | stop | stop | stop | stop | stop | stop | stop |

S = Stiche, L = Landungen, WDh = Wiederholungen
Stop = der Versuch wird beendet bei mehr als 5 Stichen.

Primärdaten für *Anopheles Stephensi:* Prüfdauer (T0 + X H) mit H = Stunden

| | Maus | Wdh | T0 | | T0+ 2H | | T0+ 4H | | T0+ 6H | | T0+ 8H | | T0+ 10H | |
|---|---|---|---|---|---|---|---|---|---|---|---|---|---|---|
| | | | S | L | S | L | S | L | S | L | S | L | S | L |
| geprüftes Produkt | 1 | 1 | 0 | 0 | 0 | 0 | 0 | 0 | 0 | 0 | 0 | 0 | stop | stop |
| | | 2 | 0 | 0 | 0 | 0 | 0 | 0 | 0 | 0 | 0 | 0 | stop | stop |
| | | 3 | 0 | 0 | 0 | 0 | 0 | 0 | 0 | 0 | 0 | 0 | stop | stop |
| | 2 | 1 | 0 | 0 | 0 | 0 | 0 | 0 | 0 | 0 | 0 | 0 | stop | stop |
| | | 2 | 0 | 0 | 0 | 0 | 0 | 0 | 0 | 0 | 0 | 1 | stop | stop |
| | | 3 | 0 | 0 | 0 | 0 | 0 | 0 | 0 | 0 | 0 | 1 | stop | stop |
| | 3 | 1 | 0 | 0 | 0 | 0 | 0 | 0 | 0 | 0 | 0 | 1 | stop | stop |
| | | 2 | 0 | 0 | 0 | 0 | 0 | 0 | 0 | 0 | 0 | 0 | stop | stop |
| | | 3 | 0 | 0 | 0 | 0 | 0 | 0 | 0 | 0 | 0 | 1 | stop | stop |
| unbehandelte Positiv Kontrolle | 1 | 1 | stop | stop | stop | stop | stop | stop | stop | stop | stop | stop | stop | stop |
| | | 2 | stop | stop | stop | stop | stop | stop | stop | stop | stop | stop | stop | stop |
| | | 3 | stop | stop | stop | stop | stop | stop | stop | stop | stop | stop | stop | stop |
| | 2 | 1 | stop | stop | stop | stop | stop | stop | stop | stop | stop | stop | stop | stop |
| | | 2 | stop | stop | stop | stop | stop | stop | stop | stop | stop | stop | stop | stop |
| | | 3 | stop | stop | stop | stop | stop | stop | stop | stop | stop | stop | stop | stop |
| | 3 | 1 | stop | stop | stop | stop | stop | stop | stop | stop | stop | stop | stop | stop |
| | | 2 | stop | stop | stop | stop | stop | stop | stop | stop | stop | stop | stop | stop |
| | | 3 | stop | stop | stop | stop | stop | stop | stop | stop | stop | stop | stop | stop |

S = Stiche, L = Landungen, Wdh = Wiederholung
Stop = der Versuch wird beendet bei mehr als 5 Stichen

4. Interpretation der Ergebnisse

Der synergistische Effekt von Ethylbutyacetylaminopropionat mit Icaridin in einem Gewichtsprozentverhältnis von 9:1 wird belegt durch eine Schutzdauer von mindestens 8 Stunden. Denn im Vergleich dazu gilt: Ethylbutyacetylaminopropionat mit einem Anteil von ca. 10 Gew.-% in einer Formulierung erreicht Schutzzeiten bis zu 4 Stunden. Icaridin wird in der Regel mit minimal 10 Gew.-% in einer Formulierung eingesetzt, um Schutzzeiten von etwa 4 Stunden zu erreichen.

**Beispiel 3: Flüssigkeit**

| Inhaltsstoff (INCI) | [%] |
|---|---|
| A | |
| 3-(Acetyl-butyl-amino)-propionsäure Ethylester | 25 |
| ICARIDIN | 5 |
| POLYSORBATE 80 | 0.20 |
| ACRYLATES/C10-30 ALKYL ACRYLATE CROSSPOLYMER | 0.20 |
| PARFUM | q.s. |
| B | |
| Ethanol 96% | 20.00 |
| AQUA (WATER) | ad 100 |
| PROPYLENE GLYCOL | 10.00 |
| C | |
| SODIUM HYDROXIDE | q.s. |

**Herstellung:**

Phasen A und B werden getrennt gemischt, Phase A wird zu Phase B unter Rühren gegeben. Mittels Phase C wird der pH eingestellt und homogenisiert.

**Beispiel 4: O/W After Sun Lotion**

| Inhaltsstoff (INCI) | [%] |
|---|---|
| **A** | |
| 3-(Acetyl-butyl-amino)-propionsäure Ethylester | 10.00 |
| ICARIDIN | 2 |
| BISABOLOL | 0.30 |
| CETEARYL ALCOHOL, CETEARYL GLUCOSIDE | 4.00 |
| CAPRYLIC/CAPRIC TRIGLYCERIDE | 2.00 |
| CYCLOPENTASILOXANE | 2.00 |
| DIMETHICONE | 1.00 |
| **B** | |
| AQUA (WATER) | ad 100 |
| GLYCERIN | 3.00 |
| Konservierungsmittel | q.s. |
| CITRIC ACID | 0.07 |
| DISODIUM PHOSPHATE | 0.59 |
| **C** | |
| XANTHAN GUM | 0.50 |

Herstellung:

Phasen A und B werden getrennt auf 75°C erhitzt, Phase C wird langsam zu B gegeben und homogenisiert. Anschließend wird bei 75°C A zu B/C gegeben und homogenisiert.

**Beispiel 5: wässriges Gel**

| Inhaltsstoff (INCI) | [%] |
|---|---|
| **A** | |
| PROPYLENE GLYCOL | 5.00 |
| ALLANTOIN | 0.20 |
| AQUA (WATER) | ad 100 |
| **B** | |
| CARBOMER | 33.30 |
| **C** | |
| Triethanolamine | 3.00 |
| **D** | |
| 3-(Acetyl-butyl-amino)-propionsäure Ethylester | 10.00 |
| ICARIDIN | 2 |

Herstellung:

Phase A wird auf 75°C erhitzt und langsam zu B gegeben. Anschließend wird C zu A/B gegeben und homogenisiert. Danach wird D zugegeben.

**Beispiel 6: Spray**

| Inhaltsstoff (INCI) | [%] |
|---|---|
| A | |
| 3-(Acetyl-butyl-amino)-propionsäure Ethylester | 20.00 |
| ICARIDIN | 3 |
| PEG-8 | 5.00 |
| PPG-15 STEARYL ETHER | 3.00 |
| PARFUM | 0.30 |
| B | |
| ALCOHOL | 35.00 |
| PEG-32 | 4.00 |
| POLYSORBATE 20 | 1.50 |
| AQUA (WATER) | ad 100 |

Herstellung:

Phase B wird langsam zu A gegeben und homogenisiert.

**Beispiel 7: Roll on**

| Inhaltsstoff (INCI) | [%] |
|---|---|
| **A** | |
| 3-(Acetyl-butyl-amino)-propionsäure Ethylester | 20.00 |
| ICARIDIN | 2 |
| PEG-8 | 5.00 |
| PPG-15 STEARYL ETHER | 3.00 |
| PARFUM | 0.30 |
| **B** | |
| ALCOHOL | 35.00 |
| PEG-32 | 4.00 |
| POLYSORBATE 20 | 1.50 |
| CARBOMER | 10.00 |
| AQUA (WATER) | ad 100 |
| **C** | |
| TRIETHANOLAMINE | 0.30 |

Herstellung:

Phasen A und B werden getrennt gemischt, Phase B wird zu Phase A unter Rühren gegeben. Mittels Phase C wird der pH eingestellt und anschließend homogenisiert.

**Beispiel 8: Creme**

| Inhaltsstoff (INCI) | [%] |
|---|---|
| **A** | |
| 3-(Acetyl-butyl-amino)-propionsäure Ethylester | 20.00 |
| ICARIDIN | 1 |
| CETEARYL ALCOHOL, CETEARYL GLUCOSIDE | 4.00 |
| CARBOMER | 0.25 |
| **B** | |
| Konservierungsmittel | q.s. |
| GLYCERIN | 3.00 |
| XANTHAN GUM | 0.50 |
| AQUA (WATER) | ad 100 |
| **C** | |
| TRIETHANOLAMINE | q.s. |

Herstellung:

Phasen A und B werden auf 70°C erhitzt, A wird langsam zu B gegeben. Mittels Phase C wird der pH eingestellt und anschließend homogenisiert.

**Beispiel 9: Creme**

| Inhaltsstoff (INCI) | [%] |
|---|---|
| **A** | |
| 3-(Acetyl-butyl-amino)-propionsäure Ethylester | 20.00 |
| ICARIDIN | 2 |

(fortgesetzt)

| Inhaltsstoff (INCI) | [%] |
|---|---|
| **A** | |
| CETEARYL ALCOHOL, CETEARYL GLUCOSIDE | 4.00 |
| CARBOMER | 0.40 |
| OLEYL ERUCATE | 1.00 |
| CYCLOPENTASILOXANE | 1.00 |
| DIBUTYL ADIPATE | 1.00 |
| ISOPROPYL PALMITATE | 1.00 |
| **B** | |
| GLYCERIN | 3.00 |
| XANTHAN GUM | 0.20 |
| Konservierungsmittel | q.s. |
| AQUA (WATER) | ad 100 |
| **C** | |
| TRIETHANOLAMINE | q.s. |

Herstellung:

Phasen A und B werden auf 70°C erhitzt, A wird langsam zu B gegeben. Mittels Phase C wird der pH eingestellt und anschließend homogenisiert.

**Beispiel 10: Tarnfarbe**

| Inhaltsstoff (INCI) | [%] |
|---|---|
| **A** | |
| CI 77499 (IRON OXIDES), MICA | 15.00 |
| TALC | 15.00 |
| **B** | |
| C18-36 ACID TRIGLYCERIDE | 12.00 |
| TRIBEHENIN | 3.00 |
| CAPRYLIC/CAPRIC TRIGLYCERIDE | 7.00 |
| STEARIC ACID | 3.00 |
| PEG-8, TOCOPHEROL, ASCORBYL PALMITATE, ASCORBIC ACID, CITRIC ACID | 0.10 |
| Konservierungsmittel | q.s. |
| PPG-2 MYRISTYL ETHER PROPIONATE | ad 100 |
| 3-(Acetyl-butyl-amino)-propionsäure Ethylester | 20.00 |
| ICARIDIN | 2 |

Herstellung:

Phase A wird gemischt langsam zu der auf 80°C erhitzten Phase B gegeben.

**Beispiel 11: Sonnenschutzmittel (SPF: 43,6)**

| Inhaltsstoff (INCI) | [%] |
|---|---|
| **A** | |
| 3-(Acetyl-butyl-amino)-propionsäure Ethylester | 10.00 |

(fortgesetzt)

| Inhaltsstoff (INCI) | [%] |
|---|---|
| **A** | |
| ICARIDIN | 2 |
| TOCOPHERYL ACETATE | 0.25 |
| ETHYLHEXYL METHOXYCINNAMATE, BHT | 7.50 |
| OCTOCRYLENE | 10.00 |
| BUTYL METHOXYDIBENZOYLMETHANE | 0.90 |
| BENZOPHENONE-3 | 1.10 |
| GLYCERYL STEARATE, PEG-100 STEARATE | 3.20 |
| COCO-GLUCOSIDE, COCONUT ALCOHOL | 1.30 |
| DIBUTYL ADIPATE | 3.00 |
| **B** | |
| LAURETH-7, POLYACRYLAMIDE, C13-14-ISOPARAFFIN | 1.20 |
| Cyclopentasiloxane | 5.00 |
| **C** | |
| GLYCERIN | 7.00 |
| XANTHAN GUM | 0.15 |
| MAGNESIUM ALUMINUM SILICATE | 0.60 |
| DISODIUM EDTA | 0.10 |
| AQUA (WATER) | ad 100 |
| **D** | |
| Konservierungsmittel | q.s. |
| PARFUM | 0.20 |
| **E** | |
| TROMETHAMINE | q.s. |

Herstellung:

Alle Phasen werden getrennt zubereitet. Phase C: Xanthan Gum und Magnesium Aluminium Silicat werden auf 75-80°C erhitzt und mit den übrigen Bestandteilen vermischt. Phase A wird bei 75°C zu Phase C gegeben. Nach Homogenisieren wird Phase B bei 60°C zugegeben. Nach Homogenisieren wird Phase D bei 40°C zugegeben. Danach wird Phase E zugegeben (pH = 6,5).

**Beispiel 12: Sonnenschutzmittel (SPF: 28,3)**

| Inhaltsstoff (INCI) | [%] |
|---|---|
| **A** | |
| PROPYLENE GLYCOL | 2.00 |
| AQUA (WATER) | ad 100 |
| CARBOMER | 0.30 |
| **B** | |
| 3-(Acetyl-butyl-amino)-propionsäure Ethylester | 10.00 |
| ICARIDIN | 1 |
| GLYCERYL STEARATE, PEG-100 STEARATE | 2.00 |
| BENZOPHENONE-3 | 5.00 |
| ETHYLHEXYL SALICYLATE | 5.00 |
| ETHYLHEXYL METHOXYCINNAMATE, BHT | 10.00 |
| 4-METHYLBENZYLIDENE CAMPHOR | 2.00 |
| ISOPROPYL PALMITATE | 1.00 |
| CETYL PEG/PPG-10/1 DIMETHICONE | 2.00 |

(fortgesetzt)

| | |
|---|---|
| **B** | |
| CYCLOPENTASILOXANE | 1.00 |
| TRIMETHYLSILOXYSILICATE, DIMETHICONE | 1.00 |
| **C** | |
| Konservierungsmittel | q.s. |
| PARFUM | q.s. |
| TRIETHANOLAMINE | 0.30 |

Herstellung:

Phasen A und B werden auf 75°C erhitzt, B wird langsam zu A gegeben. Phase C wird bei 40°C zugegeben und anschließend homogenisiert.

**Beispiel 13: Sonnenschutzmittel (SPF: 28,3)**

| Inhaltsstoff (INCI) | [%] |
|---|---|
| **A** | |
| PROPYLENE GLYCOL | 2.00 |
| AQUA (WATER) | ad 100 |
| CARBOMER | 0.30 |
| **B** | |
| 3-(Acetyl-butyl-amino)-propionsäure Ethylester | 10.00 |
| ICARIDIN | 1.50 |
| GLYCERYL STEARATE, PEG-100 STEARATE | 2.00 |
| BENZOPHENONE-3 | 5.00 |
| ETHYLHEXYL SALICYLATE | 5.00 |
| ETHYLHEXYL METHOXYCINNAMATE, BHT | 10.00 |
| 4-METHYLBENZYLIDENE CAMPHOR | 2.00 |
| ISOPROPYL PALMITATE | 1.00 |
| CETYL PEG/PPG-10/1 DIMETHICONE | 2.00 |
| CYCLOPENTASILOXANE | 1.00 |
| TRIMETHYLSILOXYSILICATE, DIMETHICONE | 1.00 |
| **C** | |
| Konservierungsmittel | q.s. |
| PARFUM | q.s. |
| TRIETHANOLAMINE | 0.30 |

Herstellung:

Phasen A und B werden auf 75°C erhitzt, B wird langsam zu A gegeben. Phase C wird bei 40°C zugegeben und anschließend homogenisiert.

**Beispiel 14: Spray**

| Inhaltsstoff (INCI) | [%] |
|---|---|
| **A** | |
| 3-(Acetyl-butyl-amino)-propionsäure Ethylester | 10.00 |
| ICARIDIN | 1.00 |

(fortgesetzt)

| Inhaltsstoff (INCI) | [%] |
|---|---|
| BENZOPHENONE-3 | 1.50 |
| ETHYLHEXYL METHOXYCINNAMATE, BHT | 3.50 |
| DICAPRYLYL CARBONATE | 0.50 |
| DECYL OLEATE | 0.25 |
| POLYGLYCERYL-3 METHYLGLUCOSE DISTEARATE | 1.00 |
| ISOPROPYL PALMITATE | 0.50 |
| **B** | |
| AQUA (WATER) | ad 100 |
| GLYCERIN | 3.00 |
| Konservierungsmittel | q.s. |
| CARBOMER | 0.10 |
| SODIUM HYDROXIDE | 0.25 |
| **C** | |
| PARFUM | 0.20 |

Herstellung:

Phasen A und B werden auf 80°C erhitzt, A wird langsam zu B gegeben. Phase C wird bei 40°C zugegeben und anschließend homogenisiert.

**Beispiel 15: Spray**

| Inhaltsstoff (INCI) | [%] |
|---|---|
| **A** | |
| 3-(Acetyl-butyl-amino)-propionsäure Ethylester | 25.00 |
| ICARIDIN | 4 |
| STEARETH-21 | 2.50 |
| Arlatone 985 | 5.00 |
| PARAFFINUM LIQUIDUM (MINERAL OIL) | 5.00 |
| DIMETHICONE | 1.00 |
| MYRISTYL ALCOHOL | 4.00 |
| **B** | |
| AQUA (WATER) | ad 100 |
| GLYCERIN | 3.00 |
| CARBOMER | 1.00 |
| C | |
| Konservierungsmittel | q.s. |
| **D** | |
| TROMETHAMINE | 0.10 |
| AQUA (WATER) | 1.00 |

Herstellung:

Phase A wird auf 75°C erhitzt und langsam zu B gegeben. Anschließend wird C zu A/B gegeben und homogenisiert. Danach wird D zur Einstellung des pH-Wertes zugegeben.

**Beispiel 16: Spray**

| Inhaltsstoff (INCI) | [%] |
|---|---|
| **A** | |
| 3-(Acetyl-butyl-amino)-propionsäure Ethylester | 22.50 |
| ICARIDIN | 2.50 |
| STEARETH-21 | 2.00 |
| Arlatone 985 | 4.00 |
| PARAFFINUM LIQUIDUM (MINERAL OIL) | 7.50 |
| DIMETHICONE | 1.00 |
| MYRISTYL ALCOHOL | 4.00 |
| **B** | |
| AQUA (WATER) | ad 100 |
| GLYCERIN | 3.00 |
| CARBOMER | 0.10 |
| **C** | |
| Konservierungsmittel | q.s. |
| **D** | |
| TROMETHAMINE | 0.15 |
| AQUA (WATER) | 1.50 |

Herstellung:

Phase A wird auf 75°C erhitzt und langsam zu B gegeben. Anschließend wird C zu A/B gegeben und homogenisiert. Danach wird D zur Einstellung des pH-Wertes zugegeben.

**Beispiel 17: Emulsion**

| Inhaltsstoff (INCI) | [%] |
|---|---|
| **A** | |
| 3-(Acetyl-butyl-amino)-propionsäure Ethylester | 25.00 |
| ICARIDIN | 3.50 |
| MYRISTYL ALCOHOL, MYRISTYL GLUCOSIDE | 5.00 |
| ISOSTEARYL ISOSTEARATE | 2.00 |
| CETYL ALCOHOL | 2.00 |
| **B** | |
| AQUA (WATER) | ad 100 |
| CARBOMER | 0.40 |
| **C** | |
| SODIUM HYDROXIDE | q.s. |
| **D** | |
| Konservierungsmittel | q.s. |
| PARFUM | q.s. |

Herstellung:

Phase A wird auf 80°C erhitzt und langsam zu B (75°C) gegeben. Anschließend wird C zu A/B gegeben und homogenisiert. Danach wird D zugegeben.

**Beispiel 18: O/W After Sun Lotion**

| Inhaltsstoff (INCI) | [%] |
|---|---|
| **A** | |
| 3-(Acetyl-butyl-amino)-propionsäure Ethylester | 10.00 |
| ICARIDIN | 2 |
| BISABOLOL | 0.30 |
| CETEARYL ALCOHOL, CETEARYL GLUCOSIDE | 4.00 |
| CAPRYLIC/CAPRIC TRIGLYCERIDE | 2.00 |
| CYCLOPENTASILOXANE | 2.00 |
| DIMETHICONE | 1.00 |
| **B** | |
| AQUA (WATER) | ad 100 |
| GLYCERIN | 3.00 |
| Konservierungsmittel | q.s. |
| **C** | |
| XANTHAN GUM | 0.50 |

Herstellung:

Phasen A und B werden getrennt auf 75°C erhitzt, Phase C wird langsam zu B gegeben und homogenisiert. Anschließend wird bei 75°C A zu B/C gegeben und homogenisiert.

**Patentansprüche**

1. Verwendung des 2-(2-Hydroxyethyl)-1-methylpropylester der 1-Piperidincarboxylsäure als Wirkungsverstärker für mindestens ein Insektenabwehrmittel, **dadurch gekennzeichnet, dass** es sich bei dem mindestens einen Insektenabwehrmittel um 3-(Acetyl-butyl-amino)-propionsäureethylester handelt.

2. Zubereitung enthaltend 0,1 bis 20 Gew.-% des 2-(2-Hydroxyethyl)-1-methylpropylester der 1-Piperidincarboxylsäure und 1 bis 60 Gew.-% 3-(Acetyl-butyl-amino)-propionsäureethylester, wobei das Gewichtsprozentverhältnis des 3-(Acetyl-butyl-amino)-propionsäure-ethylester zu dem 2-(2-Hydroxyethyl)-1-methylpropylester der 1-Piperidincarboxylsäure im Bereich von 20:1 bis 1:1 liegt.

3. Zubereitung nach Anspruch 2, **dadurch gekennzeichnet, dass** das Gewichtsprozentverhältnis des 3-(Acetyl-butyl-amino)-propionsäure-ethylester zu dem 2-(2-Hydroxyethyl)-1-methylpropylester der 1-Piperidincarboxylsäure im Bereich von 10:1 bis 5:1 liegt.

4. Zubereitung nach Anspruch 2, **dadurch gekennzeichnet, dass** das Gewichtsprozentverhältnis des 3-(Acetyl-butyl-amino)-propionsäure-ethylester zu dem 2-(2-Hydroxyethyl)-1-methylpropylester der 1-Piperidincarboxylsäure bei 1:1 ist.

5. Zubereitung nach Anspruch 2, **dadurch gekennzeichnet, dass** das Gewichtsprozentverhältnis des 3-(Acetyl-butyl-amino)-propionsäure-ethylester zu dem 2-(2-Hydroxyethyl)-1-methylpropylester der 1-Piperidincarboxylsäure bei 9:1, 5:1 und/oder 1:1 liegt.

6. Zubereitung nach einem oder mehreren der Ansprüche 2 bis 5, **dadurch gekennzeichnet, dass** mindestens ein kosmetisch oder dermatologisch verträglicher Träger enthalten ist.

7. Zubereitung nach einem oder mehreren der Ansprüche 2 bis 6 zum Schutz von Körperzellen gegen oxidativen Stress, **dadurch gekennzeichnet, dass** sie ein oder mehrere Antioxidantien und/oder Vitamine enthält.

8. Zubereitung nach einem oder mehreren der Ansprüche 2 bis 7, wobei die Zubereitung einen oder mehrere UV-Filter enthält, die vorzugsweise ausgewählt sind aus der Gruppe, die 3-(4'-Methylbenzyliden)-dl-kampfer, 1-(4-tert-Butylphenyl)-3-(4-methoxy-phenyl)propan-1,3-dion, 4-Isopropyldibenzoylmethan, 2-Hydroxy-4-methoxybenzophenon,

Methoxyzimtsäureoctylester, 3,3,5-Trimethylcyclohexylsalicylat, 4-(Dimethylamino)benzoesäure2-ethylhexylester, 2-Cyano-3,3-diphenylacrylsäure-2-ethylhexylester, 2-Phenyl-benzimidazol-5-sulfonsäure sowie ihre Kalium-, Natrium- und Triethanolaminsalze.

9. Verfahren zur Herstellung einer Zubereitung nach einem oder mehreren der Ansprüche 2 bis 8, **dadurch gekennzeichnet, dass** der 2-(2-Hydroxyethyl)-1-methylpropylester der 1-Piperidincarboxylsäure und der 3-(Acetyl-butylamino)-propionsäureethylester mit einem kosmetisch oder dermatologisch geeignetem Träger vermischt wird.

## Claims

1. Use of 2-(2-hydroxyethyl)-1-methylpropyl 1-piperidinecarboxylate as action enhancer for at least one insect repellent, **characterised in that** the at least one insect repellent is ethyl 3-(acetylbutylamino)propionate.

2. Preparation comprising 0.1 to 20% by weight of 2-(2-hydroxyethyl)-1-methylpropyl 1-piperidinecarboxylate and 1 to 60% by weight of ethyl 3-(acetylbutylamino)propionate, where the weight per cent ratio of ethyl 3-(acetylbutylamino)propionate to 2-(2-hydroxyethyl)-1-methyl-propyl 1-piperidinecarboxylate is in the range from 20:1 to 1:1.

3. Preparation according to Claim 2, **characterised in that** the weight per cent ratio of ethyl 3-(acetylbutylamino)propionate to 2-(2-hydroxy-ethyl)-1-methylpropyl 1-piperidinecarboxylate is in the range from 10:1 to 5:1.

4. Preparation according to Claim 2, **characterised in that** the weight per cent ratio of ethyl 3-(acetylbutylamino)propionate to 2-(2-hydroxy-ethyl)-1-methylpropyl 1-piperidinecarboxylate is 1:1.

5. Preparation according to Claim 2, **characterised in that** the weight per cent ratio of ethyl 3-(acetylbutylamino)propionate to 2-(2-hydroxy-ethyl)-1-methylpropyl 1-piperidinecarboxylate is 9:1, 5:1 and/or 1:1.

6. Preparation according to one or more of Claims 2 to 5, **characterised in that** at least one cosmetically or dermatologically tolerated vehicle is present.

7. Preparation according to one or more of Claims 2 to 6 for the protection of body cells against oxidative stress, **characterised in that** it comprises one or more antioxidants and/or vitamins.

8. Preparation according to one or more of Claims 2 to 7, where the preparation comprises one or more UV filters, which are preferably selected from the group comprising 3-(4'-methylbenzylidene)-dl-camphor, 1-(4-tert-butylphenyl)-3-(4-methoxyphenyl)propane-1,3-dione, 4-isopropyldibenzoylmethane, 2-hydroxy-4-methoxybenzophenone, octyl methoxycinnamate, 3,3,5-trimethylcyclohexyl salicylate, 2-ethylhexyl 4-(dimethylamino)benzoate, 2-ethylhexyl 2-cyano-3,3-diphenyl-acrylate, 2-phenylbenzimidazole-5-sulfonic acid and the potassium, sodium and triethanolamine salts thereof.

9. Process for preparing a preparation according to one or more of Claims 2 to 8, **characterised in that** 2-(2-hydroxyethyl)-1-methylpropyl 1-piperidinecarboxylate and ethyl 3-(acetylbutylamino)propionate are mixed with a cosmetically or dermatologically suitable vehicle.

## Revendications

1. Utilisation de 1-pipéridinecarboxylate de 2-(2-hydroxyéthyl)-1-méthyl-propyle comme amplificateur d'action pour au moins un répulsif d'insectes, **caractérisée en ce que** le au moins un répulsif d'insectes est le 3-(acétylbutylamino)propionate d'éthyle.

2. Préparation comprenant de 0,1 à 20% en poids de 1-pipéridinecarboxylate de 2-(2-hydroxyéthyl)-1-méthylpropyle et de 1 à 60% en poids de 3-(acétylbutylamino)propionate d'éthyle, où le rapport de pourcentage pondéral du 3-(acétylbutylamino)propionate d'éthyle au 1-pipéridinecarboxylate de 2-(2-hydroxyéthyl)-1-méthylpropyle se trouve dans la plage allant de 20:1 à 1:1.

3. Préparation selon la revendication 2, **caractérisée en ce que** le rapport de pourcentage pondéral du 3-(acétylbutylamino)propionate d'éthyle au 1-pipéridinecarboxylate de 2-(2-hydroxyéthyl)-1-méthyl-propyle se trouve dans la

plage allant de 10:1 à 5:1.

4. Préparation selon la revendication 2, **caractérisée en ce que** le rapport de pourcentage pondéral du 3-(acétylbutylamino)propionate d'éthyle au 1-pipéridinecarboxylate de 2-(2-hydroxyéthyl)-1-méthyl-propyle est de 1:1.

5. Préparation selon la revendication 2, **caractérisée en ce que** le rapport de pourcentage pondéral du 3-(acétylbutylamino)propionate d'éthyle au 1-pipéridinecarboxylate de 2-(2-hydroxyéthyl)-1-méthyl-propyle est de 9:1, 5:1 et/ou 1:1.

6. Préparation selon l'une ou plusieurs parmi les revendications 2 à 5, **caractérisée en ce qu'**au moins un véhicule cosmétiquement ou dermatologiquement tolérable est présent.

7. Préparation selon l'une ou plusieurs parmi les revendications 2 à 6 pour la protection de cellules corporelles contre un stress oxydatif, **caractérisée en ce qu'**elle comprend un(e) ou plusieurs antioxydants et/ou vitamines.

8. Préparation selon l'une ou plusieurs parmi les revendications 2 à 7, dans laquelle la préparation comprend un ou plusieurs filtres anti-UV, qui sont choisis de préférence dans le groupe comprenant le 3-(4'-méthylbenzylidène)-dl-camphre, la 1-(4-tertio-butylphényl)-3-(4-méthoxyphényl)propane-1,3-dione, le 4-isopropyldibenzoylméthane, la 2-hydroxy-4-méthoxybenzophénone, le méthoxycinnamate d'octyle, le salicylate de 3,3,5-triméthylcyclohexyle, le 4-(diméthyl-amino)benzoate de 2-éthylhexyle, le 2-cyano-3,3-diphénylacrylate de 2-éthylhexyle, l'acide 2-phénylbenzimidazole-5-sulfonique et les sels de potassium, de sodium et de triéthanolamine de ceux-ci.

9. Procédé de préparation d'une préparation selon l'une ou plusieurs parmi les revendications 2 à 8, **caractérisé en ce que** le 1-pipéridinecarboxylate de 2-(2-hydroxyéthyl)-1-méthylpropyle et le 3-(acétyl-butylamino)propionate d'éthyle sont mélangés avec un véhicule cosmétiquement ou dermatologiquement acceptable.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- WO 0205646 A
- WO 2005074897 A
- DE 4116123 A
- DE 10232595
- US 6242099 B1
- WO 0009652 A
- WO 0072806 A
- WO 0071084 A
- DE 10244282
- DE 10133202 A
- EP 0671161 A
- DE S4308282 O


### In der Beschreibung aufgeführte Nicht-Patentliteratur


- *CHEMICAL ABSTRACTS,* 119515-38-7
- Römpp Chemie Lexikon. 1993, vol. 9
- *CHEMICAL ABSTRACTS,* 207 574-74-1
- *CHEMICAL ABSTRACTS,* 103 597-45-1
- *CHEMICAL ABSTRACTS,* 180 898-37-7
- *CHEMICAL ABSTRACTS,* 103 597-45-, 187 393-00-6
- **K. LEMANSKA ; H. SZYMUSIAK ; B. TYRAKOWSKA ; R. ZIELINSKI ; I.M.C.M. RIETJENS.** *Current Topics in Biophysics,* 2000, vol. 24 (2), 101-108
- **C.A. RICE-EVANS ; N.J. MILLER ; G. PAGANGA.** *Trends in Plant Science,* 1997, vol. 2 (4), 152-159
- **K. LEMANSKA ; H. SZYMUSIAK ; B. TYRAKOWSKA ; R. ZIELINSKI ; A.E.M.F. SOFFERS ; I.M.C.M. RIETJENS.** *Free Radical Biology&Medicine,* 2001, vol. 31 (7), 869-881